(19) Europäisches Patentamt

European Patent Office

Office européen des brevets

(11) **EP 4 498 291 A1**

(12) **EUROPEAN PATENT APPLICATION**

(43) Date of publication:
**29.01.2025 Bulletin 2025/05**

(51) International Patent Classification (IPC):
***G06N 5/01*** *(2023.01)*

(21) Application number: **24159779.8**

(52) Cooperative Patent Classification (CPC):
**G06N 5/01**

(22) Date of filing: **26.02.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.07.2023 JP 2023122259**

(71) Applicant: **Kabushiki Kaisha Toshiba**
**Tokyo 105-0023 (JP)**

(72) Inventors:
- **HIDAKA, Ryo**
  **Tokyo (JP)**
- **TATSUMURA, Kosuke**
  **Tokyo (JP)**
- **YAMASAKI, Masaya**
  **Tokyo (JP)**
- **NAKAYAMA, Jun**
  **Tokyo (JP)**

(74) Representative: **Marks & Clerk LLP**
**15 Fetter Lane**
**London EC4A 1BW (GB)**

(54) **INFORMATION PROCESSING DEVICE, INFORMATION PROCESSING METHOD, COMPUTER PROGRAM, AND CIRCUIT INFORMATION**

(57)     An information processing device (20) executes processing on data. The information processing device (20) includes a processor (301) that is connected to memories. The processor (301) acquires data and generates a combination optimization problem based on the data. The processor (301) causes a solver device (40) to solve the combination optimization problem and acquires a solution of the combination optimization problem from the solver device (40). The processor (301) generates output data based on the solution and outputs the output data to a first device (12). The processor (301) generates prediction data that is obtained by predicting data acquired after the output data is given to the first device (12). In acquiring the data, the processor (301) acquires the prediction data as one piece of the data.

FIG.7

**Description**

FIELD

Embodiments described herein relate generally to an information processing device, an information processing method, a computer program, and circuit information.

BACKGROUND

Optimization of systems in various fields of application, such as control, finance, communication, logistics, and chemistry, is often mathematically reduced to combination optimization problems. An information processing system that implements various information processing functions such as recognition, determination, and planning by solving a combination optimization problem and enhances efficiency of such functions has been proposed.

The combination optimization problem is to define a cost function using a plurality of decision variables (for example, discrete variables) representing a state of a system to be optimized as arguments and solve a combination of values of a plurality of decision variables that minimizes the defined cost function. The state of the system expressed by the plurality of decision variables is referred to as a solution. In the combination optimization problem, as the number of decision variables increases, the number of states that can be taken as a solution increases exponentially. An increase in the number of states that can be taken as a solution is referred to as a combination explosion. The combinational optimization of selecting one optimum solution from all solution candidates is known as a problem that is difficult to calculate. Performing large-scale combinatorial optimization in a short time is still a challenge.

In recent years, a specific purpose device called an Ising machine that searches a ground state of an Ising spin model has attracted attention. A problem of searching the ground state of the Ising spin model is called an Ising problem. The Ising problem is a combination optimization problem that minimizes a cost function given by a quadratic function of an Ising spin that is one of binary variables. In the Ising problem, the cost function is referred to as Ising energy. Many practical combination optimization problems can be converted into Ising problems. The Ising machine can solve the Ising problem at high speed. Therefore, many practical combination optimization problems can be solved at high speed using an Ising machine.

In a case where the situation changes from moment to moment, a new combination optimization problem may be generated and solved according to the change in the situation, and processing may be performed based on the obtained solution. For example, in a case where the combination optimization problem is applied to a transaction device that electronically trades stocks in a financial transaction market, a new combination optimization problem is generated according to a price change of stocks, and a transaction is performed based on the obtained solution. Moreover, in a case where the combination optimization problem is applied to a control system that controls a moving object based on an image obtained by capturing a surrounding scene, a new combination optimization problem is generated according to a change in the image, and the moving object is controlled based on the obtained solution.

In such a system, in a case where the output data based on the solution of the combination optimization problem is output to the target device, the output data affects the target device, and the situation changes. Then, such a system newly acquires data corresponding to the changed situation, and generates and solves a new combination optimization problem again. For example, in a case where a transaction device that electronically trades stocks in a financial transaction market executes a transaction based on a solution of a combination optimization problem, the price of the traded stock price changes. In addition, in the control system that controls the moving object, the relative positional relationship between the moving object and the surrounding objects is changed by controlling the moving object, and the acquired image changes.

However, in such a system, the response of the target device is slow, and the time until the situation changes is long, or the time until data after the situation changes is output is slow, so that acquisition of data according to the situation is delayed. In such a case, it is preferable that the system can proactively perform processing according to the changed situation before acquiring data after the situation has changed.

BRIEF DESCRIPTION OF THE DRAWINGS

FIG. 1 is a diagram illustrating a model of an Ising problem;
FIG. 2 is a diagram illustrating internal variables used by a simulated bifurcation algorithm;
FIG. 3 is a flowchart illustrating a procedure of a process of a simulated bifurcation machine;
FIG. 4 is a diagram illustrating a configuration of an information processing system including an Ising machine;
FIG. 5 is a diagram illustrating a configuration of an information processing system including a simulated bifurcation machine;

FIG. 6 is a configuration diagram of a market system;

FIG. 7 is a configuration diagram of an information processing device according to the first embodiment;

FIG. 8 is a flowchart illustrating a procedure of a process of the information processing device according to the first embodiment;

FIG. 9 is a diagram illustrating processing timing of the information processing device;

FIG. 10 is a configuration diagram of an information processing device according to the second embodiment;

FIG. 11 is a configuration diagram of an information processing device according to a third embodiment;

FIG. 12 is a flowchart illustrating a procedure of a process of the information processing device according to the third embodiment;

FIG. 13 is a configuration diagram of an information processing device according to the fourth embodiment;

FIG. 14 is a flowchart illustrating a procedure of a process of the information processing device according to the fourth embodiment;

FIG. 15 is a diagram illustrating an example of a configuration of a control system; and

FIG. 16 is a hardware configuration diagram of the information processing device.

DETAILED DESCRIPTION

An information processing device according to an embodiment is a device that executes processing on data. The information processing device includes a hardware processor connected to memories. The hardware processor is configured to acquire the data and generate a combination optimization problem based on the data. The hardware processor is configured to cause a solver device to solve the combination optimization problem. The hardware processor is configured to acquire a solution of the combination optimization problem from the solver device. The hardware processor is configured to generate output data based on the solution and output the output data to a first device. The hardware processor is configured to generate prediction data obtained by predicting data acquired after the output data is given to the first device. The hardware processor is configured to acquire, in acquiring the data, the prediction data as one piece of the data.

Premise

Terms and techniques that are the premise of the description of the embodiments will be described.

The combination optimization problem is to define a cost function using a plurality of decision variables (for example, discrete variables) representing a state of a system to be optimized as arguments and solve a combination of values of a plurality of decision variables that minimizes the defined cost function.

The cost function includes a plurality of decision variables representing the state of the system as arguments, and is a linear or higher function of the decision variables. For example, the cost function is represented by a linear function or a quadratic function of a plurality of decision variables.

The cost function may be a cubic or higher function of the plurality of decision variables. In other words, the cost function is a function of summing a plurality of terms. Each of the terms is a function that multiplies one or more and a predetermined number or less of the plurality of decision variables by a coefficient.

The coefficient in each of the terms is a real number and is also referred to as a weight value. Each of the terms constituting the cost function is represented by multiplication of one or more decision variables among the plurality of decision variables and any one weight value among the plurality of weight values.

The state of the system expressed by the plurality of decision variables is referred to as a solution. A whole set of a plurality of solutions that is allowed to be taken by a state of a system is referred to as a solution space. A solution that gives the minimum value of the cost function is referred to as an exact solution. A solution that gives a value close to the minimum value of the cost function is referred to as a good solution.

The exact solution is to obtain an exact solution that gives a minimum value of a cost function of a combination optimization problem, and to ensure that the solution is an exact solution.

The heuristic solution is to find an exact solution that gives the minimum value of the cost function or a good solution that gives a value close to the minimum value of the cost function of a combination optimization problem. A heuristic solution is also referred to as a heuristic solution. The heuristic solution has no guarantee of an index representing the accuracy of the solution, namely, how close the heuristic solution gives a value to the minimum value of the cost function. The heuristic solution method can output a solution with practically significant accuracy in a shorter solving time than the exact solution method.

The calculation amount of the solution to the combination optimization problem is the amount of operation required to obtain a solution, for example, the number of times of product-sum operation or the like. The solving time required to obtain a solution to the combination optimization problem depends not only on the amount of calculation but also on the configuration of the computer machine that processes the calculation. For example, the higher the computational parallelism and the operating frequency of the computer machine, the shorter the solving time.

The quadratic unconstrained binary optimization (QUBO) problem is an unconstrained quadratic optimization problem in which the decision variable is binary. In the QUBO problem, each of terms included in the cost function is represented by a quadratic expression or a linear expression of the decision variable. The QUBO problem in a narrow definition is a binary variable with a decision variable of zero or one. In the embodiment, the QUBO problem represents a problem of definition in a narrow sense in which the decision variable is zero or one. In the narrow-sense definition QUBO problem, the decision variable may also be referred to as a bit variable.

The cost function of the QUBO problem is expressed by $H_{total\_QUBO}$ of Expression (1).

$$H_{total\_QUBO} = \sum_{i=1}^{N}\sum_{j=1}^{N} Q_{ij}b_i b_j = 2\sum_{i=1}^{N}\sum_{i<j}^{N} Q_{ij}b_i b_j + \sum_{i=1}^{N} Q_{ii}b_i \qquad \cdots (1)$$

N is an integer of two or more and represents the number of decision variables. i and j represent an integer of one or more and N or less. $b_i$ is zero or one, and represents the i-th decision variable among the N decision variables. $b_j$ is zero or one, and represents the j-th decision variable among the N decision variables. $Q_{ij}$ represents coefficients of the i-th row and the j-th column included in the coefficient matrix (Q) of N×N. Note that $Q_{ij} = Q_{ji}$. $Q_{ii}$ is a coefficient included in the i-th row and the i-th column of the coefficient matrix (Q), and is a coefficient multiplied by the first-order term of the i-th decision variable. $Q_{ii}$ is referred to as a bias coefficient.

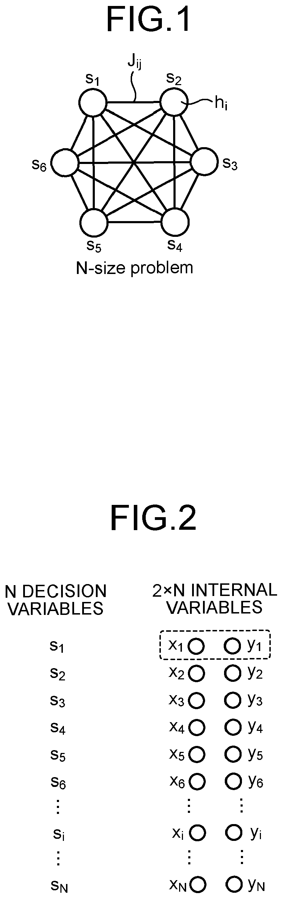

FIG. 1 is a diagram illustrating a model of an Ising problem. The Ising problem is a problem of searching a ground state of an Ising model. The Ising problem is one of the QUBO problems. The decision variable of the Ising problem represents a discrete variable of -1 or +1.

The cost function of the Ising problem is expressed by $H_{total\_Ising}$ of Expression (2).

$$H_{total\_Ising} = -\frac{1}{2}\sum_{i=1}^{N}\sum_{j=1}^{N} J_{ij}s_i s_j + \sum_{i=1}^{N} h_i s_i \qquad \cdots (2)$$

N is an integer of two or more and represents the number of decision variables. i and j represent an integer of one or more and N or less. $s_i$ is -1 or +1, and represents the i-th decision variable among the N decision variables. $s_j$ is -1 or +1, and represents the j-th decision variable among the N decision variables. $J_{ij}$ represents coefficients of the i-th row and the j-th column included in the coefficient matrix (J) of N×N. Note that $J_{ij} = J_{ji}$. hi is a coefficient multiplied by a first-order term of the i-th decision variable. $h_i$ is referred to as a bias coefficient.

The QUBO problem in which the decision variable is $s_i$ corresponds to the problem of the ground state search of the Ising model, which is one of the magnetic body models in the statistical mechanics. Therefore, $s_i$ may also be referred to as a spin variable. Moreover, N, which is the number of decision variables, may also be referred to as the number of spins. In addition, $H_{total\_Ising}$ may also be referred to as Ising energy. The vector represented by the N sis having the minimum value of $H_{total\_Ising}$ may be referred to as a ground state (ground spin arrangement).

The cost function of the QUBO problem and the cost function of the Ising problem differ only in the value of the constant. Therefore, the QUBO problem and the Ising problem are the same as a combination optimization problem. The QUBO problem and the Ising problem can be mutually converted. For example, the Ising problem and the QUBO problem are mutually converted by Expressions (3-1), (3-2), (3-3), and (3-4).

$$s_i = 2b_i - 1 \qquad \cdots (3\text{-}1)$$

$$J_{ij} = -\frac{Q_{ij}}{2} \ (i \neq j) \qquad \cdots (3\text{-}2)$$

$$J_{ii} = 0 \qquad \cdots (3\text{-}3)$$

$$h_i = \sum_{j=1}^{N} \frac{Q_{ij}}{2} \qquad \cdots (3\text{-}4)$$

The QUBO and Ising problems are known to be NP-complete. Many NP-hard problems can be converted into a QUBO problem or an Ising problem in polynomial time. Therefore, many practical combination optimization problems can be converted into the QUBO problem or the Ising problem.

The Ising machine is a device that solves an Ising problem. Many Ising machines solve Ising problems with heuristic solutions. Ising machines of various principles based on electronics, optics, quantum mechanics, statistical mechanics, and the like have been proposed. Many Ising machines can output an exact solution or a good solution in a short time.

The simulated bifurcation algorithm is an algorithm for solving a combination optimization problem. The simulated bifurcation algorithm is a heuristic solution algorithm.

For example, Hayato Goto, Kosuke Tatsumura and Alexander R. Dixon, "Combinatorial optimization by simulating adiabatic bifurcations in nonlinear Hamiltonian systems," Science Advances 5, eaav2372, 2019 and Hayato Goto, Kotaro Endo, Masaru Suzuki, Yoshisato Sakai, Taro Kanao, Yohei Hamakawa, Ryo Hidaka, Masaya Yamasaki and Kosuke Tatsumura, "High-performance combinatorial optimization based on classical mechanics", Science Advances 7, eabe7953, 2021 and JP 2021-060864 A, JP 2019-145010 A, JP 2019-159566 A, JP 2021-043667 A, and JP 2021-043589A disclose the simulated bifurcation algorithm. The simulated bifurcation algorithm is also referred to as a quantum inspired algorithm because it has been discovered with an idea from a quantum mechanical optimization method based on the quantum adiabatic theorem. The simulated bifurcation algorithm can solve a combination optimization problem in which the cost function is a quadratic function of a plurality of decision variables. The simulated bifurcation algorithm can also solve a combination optimization problem in which the cost function is a cubic or higher function of a plurality of decision variables, namely, a higher order binary optimization (HUBO) problem. For example, a simulated bifurcation algorithm that solves the HUBO problem is disclosed in JP 2021-043667 A. Moreover, the simulated bifurcation algorithm can also solve a combination optimization problem including variables of continuous values in part of or all decision variables. A simulated bifurcation algorithm that solves a combination optimization problem including variables of continuous values in part of or all the decision variables is disclosed in JP 2021-043589A.

The simulated bifurcation machine is a calculation apparatus that executes a process according to the simulated bifurcation algorithm. A simulated bifurcation machine that solves a QUBO problem or an Ising problem is an example of an Ising machine. In the present embodiment, the simulated bifurcation machine solves the Ising problem.

FIG. 2 is a diagram illustrating internal variables used by the simulated bifurcation algorithm.

In a case of solving a combination optimization problem in which a cost function is represented using N decision variables ($s_1$ to $s_N$), the simulated bifurcation algorithm uses N position variables ($x_1$ to $x_N$) and N momentum variables ($y_1$ to $y_N$) as internal variables. The simulated bifurcation algorithm uses $2 \times N$ internal variables.

N position variables ($x_i$) correspond to N decision variables ($s_i$) on a one-to-one basis. The i-th position variable ($x_i$) among the N position variables corresponds to the i-th decision variable ($s_i$) among the N decision variables. N momentum variables ($y_i$) correspond to N decision variables ($s_i$) on a one-to-one basis. The i-th momentum variable ($y_i$) among the N momentum variables corresponds to the i-th decision variable ($s_i$) among the N decision variables.

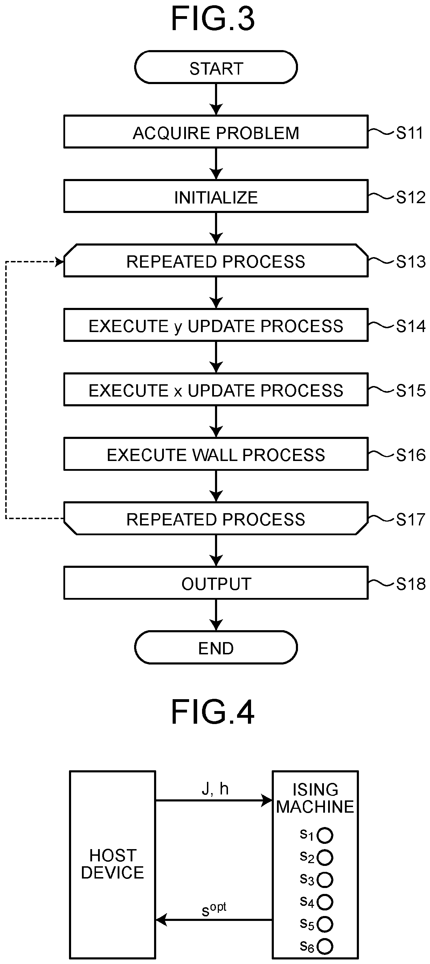

FIG. 3 is a flowchart illustrating a procedure of a process of the simulated bifurcation machine. The simulated bifurcation machine executes a process according to the simulated bifurcation algorithm in the procedure illustrated in FIG. 3.

First, in S11, the simulated bifurcation machine acquires the Ising problem. Specifically, the simulated bifurcation machine acquires J, which is a matrix including $N \times N$ coefficients, and h including N bias coefficients.

Subsequently, in S12, the simulated bifurcation machine initializes $2 \times N$ internal variables, namely, N position variables ($x_1$ to $x_N$) and N momentum variables ($y_1$ to $y_N$). The simulated bifurcation machine may acquire both or one of the initial values of the N position variables ($x_1$ to $x_N$) and the initial values of the N momentum variables ($y_1$ to $y_N$) from the outside. Moreover, the simulated bifurcation machine may generate the initial values of the N position variables ($x_1$ to $x_N$) and the initial values of the N momentum variables ($y_1$ to $y_N$) by a random number generated by a random number generation circuit, or may set the initial values to predetermined values. Note that, since the simulated bifurcation machine is heuristic, even in the same problem, when at least one of the initial values of the N position variables ($x_1$ to $x_N$) and the initial values of the N momentum variables ($y_1$ to $y_N$) is different, a different good solution may be output.

Subsequently, the simulated bifurcation machine repeats the process of S14 to S16 a preset number of times (loop processing between S13 and S17). The process of S14 to S16 is a matrix arithmetic process of matrix-multiplying N position variables ($x_1$ to $x_{rr}$) by a matrix including weight values of N rows $\times$ N columns, and a time evolution process of time-evolving the N position variables ($x_1$ to $x_N$) and the N momentum variables ($y_1$ to $y_N$).

In S14, the simulated bifurcation machine executes a y update process of updating each of the N momentum

variables ($y_1$ to $y_N$). In the update process of the i-th momentum variable (yi) in the y update processing, the simulated bifurcation machine updates the i-th momentum variable (yi) by the N position variables ($x_1$ to $x_N$), the N coefficients ($J_{i,j}$) representing the interaction between the i-th position variable ($x_i$) in the N×N matrices (J) and the other (N-1) position variables ($x_{1 \text{ to } i-1}$, $x_{i+1 \text{ to } N}$), and the i-th bias coefficient ($h_i$).

Subsequently, in S15, the simulated bifurcation machine executes an x update process of updating each of the N position variables ($x_1$ to $x_N$). The simulated bifurcation machine updates the i-th position variable ($x_i$) by the i-th momentum variable (yi) in the update process of the i-th position variable ($x_i$) in the x update processing.

Note that the simulated bifurcation machine may execute the process of S14 and the process of S15 in an order changed.

Subsequently, in S16, the simulated bifurcation machine executes a wall process on the position variable whose absolute value exceeds one among the N position variables ($x_1$ to $x_N$). Moreover, the simulated bifurcation machine also executes a wall process on the momentum variable corresponding to the position variable whose absolute value exceeds one. For example, in the wall process, the simulated bifurcation machine changes a value of the position variable whose absolute value exceeds one to a value whose absolute value is one or smaller than one in a state where the signs are the same. Moreover, for example, the simulated bifurcation machine changes a value of the momentum variable corresponding to the position variable whose absolute value exceeds one to zero in the wall processing.

The simulated bifurcation algorithm has variations in operations of the x update processing, the y update processing, and the wall processing. For example, variations of the simulated bifurcation algorithm include an adiabatic simulated bifurcation (aSB) algorithm, a ballistic simulated bifurcation (bSB) algorithm, and a discrete simulated bifurcation (dSB) algorithm.

In a case where the processing according to the adiabatic simulated bifurcation algorithm is executed, the simulated bifurcation machine executes an operation represented by Expression (4-1) in the y update processing (S14) and executes an operation represented by Expression (4-2) in the x update processing (S 15). Note that, in a case where the processing according to the adiabatic simulated bifurcation algorithm is executed, the simulated bifurcation machine does not execute the wall process (S15).

$$y_i(t_{k+1}) = y_i(t_k)$$

$$+ \left\{ -Kx_i^3(t_k) - [a_0 - a(t_k)]x_i(t_k) - \eta h_i \right.$$

$$\left. + c_0 \sum_{j=1}^{N} J_{i,j} x_j(t_k) \right\} \Delta_t \qquad \cdots (4\text{-}1)$$

$$x_i(t_{k+1}) = x_i(t_k) + a_0 y_i(t_{k+1})\Delta_t \qquad \cdots (4\text{-}2)$$

In a case where the processing according to the ballistic simulated bifurcation algorithm is executed, the simulated bifurcation machine executes an operation represented by Expression (5-1) in the y update processing (S14), executes an operation represented by Expression (5-2) in the x update processing (S15), and executes an operation represented by Expression (5-3) in the wall processing (S16).

$$y_i(t_{k+1}) = y_i(t_k)$$

$$+ \left\{ -[a_0 - a(t_k)]x_i(t_k) - \eta h_i + c_0 \sum_{j=1}^{N} J_{i,j} x_j(t_k) \right\} \Delta_t \qquad \cdots (5\text{-}1)$$

$$x_i(t_{k+1}) = x_i(t_k) + a_0 y_i(t_{k+1})\Delta_t \qquad \cdots (5\text{-}2)$$

$$\text{if } |x_i(t_{k+1})| > 1, \text{ set } x_i(t_{k+1}) = \text{sgn}\big(x_i(t_{k+1})\big) \text{ and } y_i(t_{k+1}) = 0 \quad \cdots (5\text{-}3)$$

In a case where the processing according to the discrete simulated bifurcation algorithm is executed, the simulated bifurcation machine executes an operation represented by Expression (6-1) in the y update processing (S14), executes an operation represented by Expression (6-2) in the x update processing (S15), and executes an operation represented by Expression (6-3) in the wall processing (S16).

$$y_i(t_{k+1}) = y_i(t_k)$$
$$+ \left\{ -[a_0 - a(t_k)]x_i(t_k) - \eta h_i \right.$$
$$\left. + c_0 \sum_{j=1}^{N} J_{i,j}\,\text{sgn}[x_i(t_k)] \right\} \Delta_t \quad \cdots (6\text{-}1)$$

$$x_i(t_{k+1}) = x_i(t_k) + a_0 y_i(t_{k+1})\Delta_t \quad \cdots (6\text{-}2)$$

$$\text{if } |x_i(t_{k+1})| > 1, \text{ set } x_i(t_{k+1}) = \text{sgn}\big(x_i(t_{k+1})\big) \text{ and } y_i(t_{k+1}) = 0 \quad \cdots (6\text{-}3)$$

In Expressions (4-1), (4-2), (5-1), (5-2), (5-3), (6-1), (6-2), and (6-3), each of $t_k$ and $t_{k+1}$ represent a time. $t_{k+1}$ is a time obtained by adding a unit time ($\Delta t$) to $t_k$.

$x_i(t_k)$ indicates a value of the i-th position variable ($x_i$) at the time ($t_k$). $x_i(t_{k+1})$ indicates a value of the i-th position variable ($x_i$) at the time ($t_{k+1}$). $y_i(t_k)$ indicates a value of the i-th momentum variable ($y_i$) at the time ($t_k$). $y_i(t_{k+1})$ indicates a value of the i-th momentum variable ($y_i$) at the time ($t_{k+1}$).

K, $a_0$, $\eta$, and $c_0$ are predetermined constants. $a(t_k)$ is a function that changes with time. $a(t_k)$, where, for example, $a(t_i) = 0$, is a positive real number that increases as the time increases, and is a function that is $a_0$ at the end time (T) ($a(T) = a_0$). Moreover, $\text{sgn}(x_i(t_k))$ is a function that outputs the sign of the i-th position variable ($x_i$) at the time ($t_k$), and is +1 when $x_i(t_k)$ is zero or more and -1 when $x_i(t_k)$ is less than zero.

In a case where the process of S14 to S16 are executed a predetermined number of times, namely, in a case where the operation is executed until time t reaches final time T, the simulated bifurcation machine exits the loop processing between S13 and S 17 and advances the process to S 18.

In S18, the simulated bifurcation machine outputs N position variables ($x_1$ to $x_N$) at the final time or N decision variables ($s_1$ to srr) calculated based on the N position variables ($x_1$ to $x_N$) at the final time. The simulated bifurcation machine calculates the i-th decision variable ($s_i$) among the N decision variables ($s_1$ to $s_N$) based on $\text{sgn}(x_i)$.

When the process of S18 ends, the simulated bifurcation machine ends the process according to the simulated bifurcation algorithm.

Note that the number of repetitions of the time evolution processing (loop processing between S13 and S17) is determined in advance in accordance with the application. The calculation amount necessary for one cycle of processing (one cycle of S14 to S16) in the time evolution process does not change. Therefore, the simulated bifurcation machine can reduce the fluctuation in the solving time. Therefore, even when the simulated bifurcation machine is applied to a real-time system having a time constraint that the processing is required to be completed by a predetermined time, the solution can be reliably output by the predetermined time.

Moreover, for example, as disclosed in JP 2021-060864 A, the simulated bifurcation machine can be configured using a dedicated parallel processing circuit including a large number of arithmetic units. As a result, the simulated bifurcation machine can extremely shorten the calculation time for one cycle of processing in the time evolution process. In addition, unlike the case of software processing, in a simulated bifurcation machine mounted on a dedicated hardware circuit, any interrupt processing does not occur, so that the solving time is strictly fixed. For example, a simulated bifurcation machine mounted on a dedicated hardware circuit can fix the time until a solution is obtained in units of clock cycles. Therefore, in a case where the simulated bifurcation machine mounted on a dedicated hardware circuit is applied to a real-time system, it is possible to output a solution while more reliably protecting a time constraint.

FIG. 4 is a diagram illustrating a configuration of an information processing system including an Ising machine and a host device. An information processing system having a function of solving a combination optimization problem can be configured by, for example, an Ising machine and a host device. The host device executes a process other than a process executed by the Ising machine. In this case, the Ising machine is introduced for the purpose of reducing the solving time of the combination optimization problem and is considered as an accelerator or an off-loader. The host device includes a general-purpose processor, an off-loader other than an Ising machine, a memory, a storage, a sensor, an actuator, a communication interface, and the like.

The host device provides the Ising machine with at least information identifying the QUBO problem (matrix (Q)) or information identifying the Ising problem (matrix (J) and bias coefficient array (h)). The Ising machine may acquire information identifying the QUBO problem (matrix (Q)) and convert it into information identifying the Ising problem (matrix (J) and bias coefficient array (h)). Then, after the optimization processing, the Ising machine returns arrangement information ($s^{opt}$) representing N decision variables ($s_1$ to srr) as a solution to the host device.

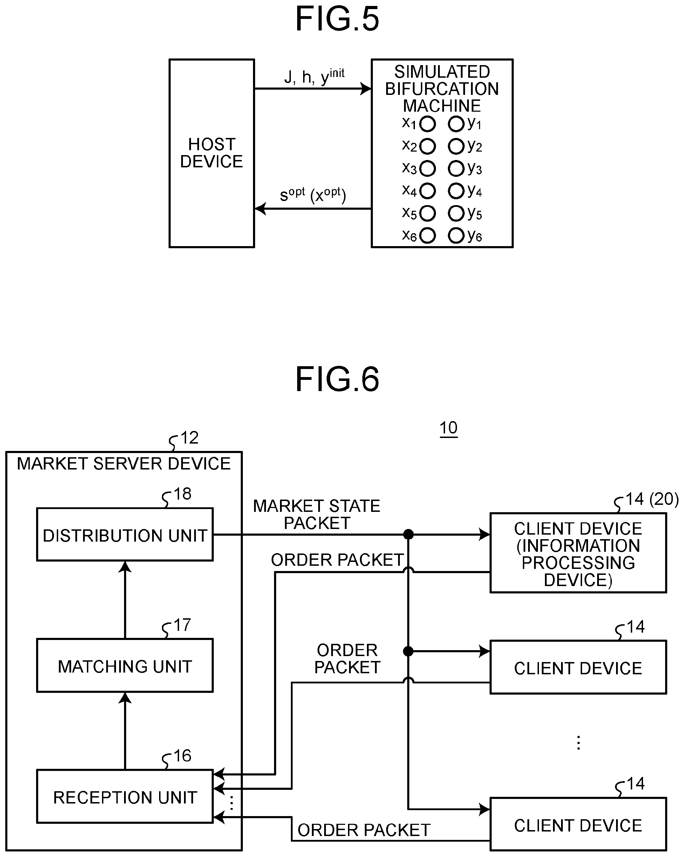

FIG. 5 is a diagram illustrating a configuration of an information processing system including a simulated bifurcation machine and a host device.

An information processing system having a function of solving a combination optimization problem may include a simulated bifurcation machine as an Ising machine. In this case, the host device provides the simulated bifurcation machine with information (matrix (J) and bias coefficient (h)) for identifying the Ising problem. The host device may provide the simulated bifurcation machine with initial values of the N position variables ($x_1$ to $x_N$) and initial values of the N momentum variables ($y_1$ to $y_N$). In addition, the host device may provide the simulated bifurcation machine with various constants, functions (for example, K, $a_0$, $c_0$, a(t) and $\Delta t$), and the like used in the simulated bifurcation algorithm. After the optimization processing, the simulated bifurcation machine may return, as a solution, the arrangement information ($x^{opt}$) representing N position variables ($x_1$ to $x_N$) to the host device, instead of the arrangement information ($s^{opt}$) representing N decision variables ($s_1$ to $s_N$).

First Embodiment

Next, a market system 10 according to the first embodiment will be described.

FIG. 6 is a diagram illustrating a configuration of the market system 10. The market system 10 executes electronic transactions of a plurality of targets by a plurality of participants. More specifically, the market system 10 receives a buy order and a sell order from each of the participants for each of the targets, matches the price and the quantity of the received buy order with the price and the quantity of the sell order, and electronically establishes a transaction.

In the present embodiment, the market system 10 executes a trade transaction of a plurality of stocks (a plurality of names of stocks) as electronic transactions of a plurality of targets. Note that the target is not limited to stocks as long as it can be traded in the market, and may be securities such as bonds, stock investment trusts, real estate investment trusts, and futures thereof, financial products such as foreign exchange, interest rates, and interest rate futures, products such as gold, crude oil, and grains, and product futures thereof.

The market system 10 includes a market server device 12 and a plurality of client devices 14.

The market server device 12 is a computer used by a market manager. The market server device 12 is connected to a plurality of client devices 14 via a network.

Each of the client devices 14 is a device used by participants in the market. Each of the client devices 14 is realized by, for example, a computer.

Each of the client devices 14 determines which stock among the plurality of stocks to trade. Each of the client devices 14 generates an order packet including transaction information about the stock determined to be traded among the plurality of stocks to transmit the order packet to the market server device 12. The order packet includes, as transaction information, for example, identification information for identifying a stock to be traded among a plurality of stocks, a trade direction representing a sell order or a buy order for the stock identified by the identification information, a price (namely, the stock price), and a quantity (namely, the number of stocks). Note that the price is not limited to a specific value, and may be, for example, a value at the time of establishment of trade after the start of the market, or a value having a constant width.

The market server device 12 executes transactions of a plurality of stocks. The market server device 12 includes a reception unit 16, a matching unit 17, and a distribution unit 18.

The reception unit 16 receives an order packet transmitted from each of the client devices 14. The reception unit 16 provides the information about the received order packet to the matching unit 17.

The matching unit 17 performs matching between the price and the quantity of the sell order and the price and the quantity of the buy order for each of the stocks, and establishes a transaction between the sell order and the buy order in which the price and the quantity match in order of reception. The matching unit 17 provides the distribution unit 18 with information about an order for which a transaction has been established and information about an order for which a transaction has not been established.

Based on the information acquired from the matching unit 17, the distribution unit 18 simultaneously distributes the market state packet including the information indicating the stock transaction status to the plurality of client devices 14.

For example, the market state packet is generated for each of the stocks. The market state packet includes identification information for identifying stocks, and a transaction price that is the latest price at which a transaction has been established for the stocks identified by the identification information.

In addition, the market state packet may include the indication information (first information) of each of the stocks. The indication information is information indicating the price and the quantity of the buy order for which the transaction is not established and information indicating the price and the quantity of the sell order for which the transaction is not established for each of the stocks.

The distribution unit 18 irregularly distributes the market state packet. For example, when the transaction is established, the distribution unit 18 distributes the market state packet for the stock for which the transaction is established. For example, each of the client devices 14 acquires a market state packet irregularly distributed, and determines which stock among the plurality of stocks to trade based on information included in the acquired market state packet. Then, each of the client devices 14 generates an order packet for the determined stock to transmit the order packet to the market server device 12.

An information processing device 20 according to the present embodiment functions as the client device 14 in the market system 10. The information processing device 20 may be realized by a computer including a processor, a memory, and the like, or may have a configuration including a dedicated hardware circuit in addition to the processor, the memory, and the like.

Here, the information processing device 20 generates a combination optimization problem based on market state packets acquired irregularly, solves the generated combination optimization problem, and determines whether to trade for each of the stocks based on a solution of the combination optimization problem obtained by the solving.

In the present embodiment, the information processing device 20 uses the function shown in Expression (7) as the cost function in the combination optimization problem.

$$Cost = \sum_{i=1}^{N} \left\{ \left( \alpha - \left| \frac{p_i(t)}{p_i(0)} - 1 \right| \right) * b_i \right\}$$

$$+ \beta \sum_{i=1}^{N} \sum_{j=1}^{N} \left\{ (-1) * \left| \left( \frac{p_i(t)}{p_i(0)} - 1 \right) - \left( \frac{p_j(t)}{p_j(0)} - 1 \right) \right| * b_i * b_j \right\} \qquad \cdots (7)$$

In Expression (7), N is an integer of two or more, and represents the number of issues of a plurality of stocks traded in the market server device 12. i and j are integers of one or more and N or less, and are indexes for identifying each of the stocks.

The cost function of Expression (7) includes N decision variables. $b_i$ is a binary of 0 or 1, and is a decision variable indicating whether to trade the i-th stock among the plurality of stocks. $b_j$ is a binary value of 0 or 1, and is a decision variable indicating whether to trade the j-th stock among the plurality of stocks. In the present embodiment, $b_i$ and $b_j$ represent 1 in a case where transaction is performed and 0 in a case where transaction is not performed.

t represents a time between the transaction start time and the transaction end time in one day. t is 0 at the transaction start time, and increases as time passes from the transaction start time. In the present embodiment, t is an integer and represents time by indexing.

pi(t) is a transaction price at time t in the i-th stock, namely, a stock price at time t. pi(0) is the transaction price of the i-th stock at the transaction start time, namely, a stock price at the transaction start time. $\alpha$ and $\beta$ are preset constants.

$p_i(t)/p_i(0)$ -1 represents a rate of change based on the transaction price at the transaction start time. In a case where $p_i(t)/p_i(0)$ -1 is greater than 0, it indicates that the price of the i-th stock is rising, and in a case where it is less than 0, it indicates that the price of the i-th stock is falling.

The first term on the right side of the cost function of Expression (7) is a term for evaluating the difference between the rate of change in each of the stocks and the preset $\alpha$. Therefore, the cost function of Expression (7) decreases in a case of trading stocks with a rate of change greater than $\alpha$.

The second term on the right side of the cost function of Expression (7) is a term for evaluating the absolute value of the difference between the rate of change in the i-th stock and the rate of change in the j-th stock among the plurality of stocks. Therefore, the cost function of Expression (7) decreases in a case where a set of two stocks in which the absolute value of the difference between the rates of change is large, namely, correlation of the rates of change is small is traded.

From the above, the combination optimization problem that minimizes the cost function of Expression (7) can obtain a solution in which risk dispersion is performed so as to trade stocks having a low correlation while trading stocks having a high rate of change.

The information processing device 20 acquires a solution of the combination optimization problem that minimizes such a cost function, namely, the values of the N decision variables. The information processing device 20 determines to trade the stock corresponding to the decision variable having a value of 1 among the N decision variables. Then, the information processing device 20 generates an order packet including transaction information about the stock determined to execute transaction among the plurality of stocks to transmit the order packet to the market server device 12.

In addition, the information processing device 20 determines a trade direction for the i-th stock, namely, whether to place a sell order or a buy order, based on the rate of change. For example, in a case of placing a buy order in the case of a rising trend, namely, in a case of market follower, the information processing device 20 places a buy order in a case where the rate of change is positive, and places a sell order in a case where the rate of change is negative. On the other hand, for example, in a case of placing a sell order in a case of an upward trend, namely, in a case of contrarian, the information processing device 20 places a sell order in a case where the rate of change in the rate of change is positive, and places a buy order in a case where the rate of change in the rate of change is negative. In the present embodiment, the information processing device 20 places a sell order in a case where the rate of change is positive, and places a buy order in a case where the rate of change is negative.

Note that the information processing device 20 may solve a combination optimization problem that minimizes a cost function other than the cost function shown in Expression (7).

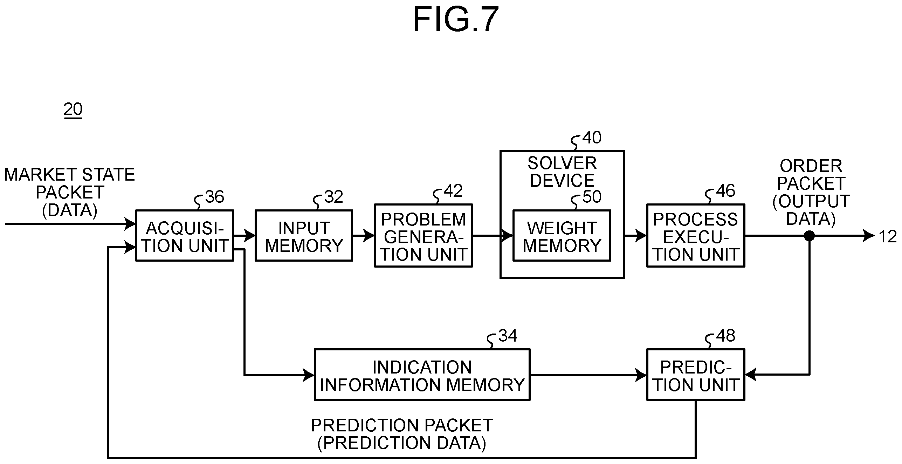

FIG. 7 is a diagram illustrating a configuration of the information processing device 20 according to the first embodiment.

The information processing device 20 acquires data given irregularly, generates a combination optimization problem based on the acquired data, and generates output data based on a solution of the generated combination optimization problem. Then, the information processing device 20 outputs the generated output data to a first device different from the information processing device 20. In the present embodiment, the information processing device 20 receives a market state packet irregularly provided from the market server device 12 as data. The information processing device 20 generates a combination optimization problem based on the received market state packet, and generates an order packet as output data based on a solution to the generated combination optimization problem. In the present embodiment, the information processing device 20 transmits the generated order packet to the market server device 12 which is an example of the first device.

The information processing device 20 includes an input memory 32, an indication information memory 34, an acquisition unit 36, a solver device 40, a problem generation unit 42, a process execution unit 46, and a prediction unit 48.

The input memory 32 stores a plurality of input values on which a plurality of weight values included in the cost function of the combination optimization problem is based. In the present embodiment, the input memory 32 stores values corresponding to a plurality of transaction prices as a plurality of input values. The values corresponding to the plurality of transaction prices stored in the input memory 32 correspond to the plurality of stocks on a one-to-one basis. The input memory 32 stores a value corresponding to the transaction price for each of the stocks. In the present embodiment, the information processing device 20 trades N stocks. Therefore, the input memory 32 stores N input values as a plurality of input values. In addition, an n-th input value, where n is an integer of one or more and N or less, among the N input values corresponds to an n-th target among the N stocks. The value corresponding to the transaction price may be the transaction price or a value obtained by performing predetermined processing or calculation on the transaction price. For example, the value according to the transaction price may be a rate of change representing a ratio of the latest transaction price to the transaction price at the transaction start time.

The indication information memory 34 stores indication information for each of the N stocks. For example, the indication information memory 34 may store an array including, for example, indication information for each of the N stocks.

The acquisition unit 36 acquires data irregularly and repeatedly provided. The data acquired by the acquisition unit 36 includes input information about at least one target among the plurality of targets. In a case of acquiring the data, the acquisition unit 36 rewrites the input value corresponding to the target related to the input information included in the acquired data among the plurality of input values stored in the input memory 32 based on the input information included in the acquired data.

In the present embodiment, the acquisition unit 36 acquires a market state packet, which is an example of data repeatedly given irregularly, from the market server device 12. The market state packet includes a transaction price of at least one stock among the N stocks as input information. Then, in a case of acquiring the market state packet, the acquisition unit 36 rewrites a value corresponding to the transaction price for the stock indicated in the acquired market state packet among the values corresponding to the transaction prices for each of the N stocks stored in the input memory 32 based on the transaction price included in the acquired market state packet. Specifically, in a case of acquiring the market state packet including the transaction price of the n-th stock, the acquisition unit 36 rewrites the value corresponding to the n-th transaction price stored in the input memory 32 based on the transaction price of the n-th stock.

In addition, the market state packet may include indication information about at least one stock among the N stocks. In a case of acquiring the market state packet including the indication information, the acquisition unit 36 rewrites the indication information about the stock indicated in the acquired market state packet among the indication information for each of the N stocks stored in the indication information memory 34 based on the indication information included in the acquired market state packet.

The solver device 40 receives the combination optimization problem from the problem generation unit 42 and solves the received combination optimization problem. Then, the solver device 40 outputs a solution of the received combination optimization problem. In the present embodiment, the solver device 40 is a simulated bifurcation machine that is one of the Ising machines, and is implemented in a dedicated hardware circuit. Moreover, in the present embodiment, the solver device 40 includes a weight memory 50 that stores a plurality of weight values included in the cost function of the combination optimization problem. For example, the weight memory 50 stores a matrix (J) representing a plurality of weight values included in the cost function shown in Expression (7) and a bias coefficient array (h).

Note that the solver device 40 may solve the combination optimization problem based on another algorithm instead of the simulated bifurcation machine. Moreover, the solver device 40 may solve a combination optimization problem by a processor executing a program, instead of by a dedicated hardware circuit, may be a server device, on a network, that solves a combination optimization problem, or may be a device including a host device and an Ising machine.

The problem generation unit 42 generates a combination optimization problem based on the data acquired by the acquisition unit 36, and causes the solver device 40 to solve the generated combination optimization problem. More specifically, the problem generation unit 42 generates a combination optimization problem based on a plurality of input values stored in the input memory 32, and causes the solver device 40 to solve the generated combination optimization problem.

The problem generation unit 42 gives the generated combination optimization problem to the solver device 40 in a format that can be received by the solver device 40. For example, the problem generation unit 42 generates a plurality of weight values included in the cost function of the combination optimization problem, and gives the plurality of generated weight values to the solver device 40. For example, in a case where the solver device 40 is an Ising machine and the combination optimization problem is an Ising problem, the problem generation unit 42 generates a matrix (J) and a bias coefficient array (h) and gives the generated matrix (J) and bias coefficient array (h) to the solver device 40. For example, in a case where the solver device 40 receives a mathematical expression representing a cost function, the problem generation unit 42 may generate a cost function based on a value corresponding to the transaction price of N stocks stored in the input memory 32, and give the generated cost function to the solver device 40. Moreover, in a case where the solver device 40 can receive the constraint condition together with the cost function, the problem generation unit 42 may generate information representing the cost function and the constraint condition and give the information to the solver device 40.

In the present embodiment, the problem generation unit 42 generates a combination optimization problem that minimizes the cost function shown in Expression (7). Then, in the present embodiment, the problem generation unit 42 generates a plurality of weight values included in the cost function of the combination optimization problem shown in Expression (7) based on the plurality of input values stored in the input memory 32, and writes the plurality of generated weight values into the weight memory 50. More specifically, the problem generation unit 42 generates the matrix (J) and the bias coefficient array (h) obtained by Expression (7) based on the values corresponding to the transaction prices of the N stocks stored in the input memory 32, and writes the generated matrix (J) and bias coefficient array (h) into the weight memory 50.

Moreover, the problem generation unit 42 generates a combination optimization problem in response to acquiring data or in a preset cycle, and causes the solver device 40 to solve the combination optimization problem. In the present embodiment, the problem generation unit 42 generates the combination optimization problem in response to the acquisition unit 36 acquiring the market state packet or at a preset cycle, and causes the solver device 40 to solve the combination optimization problem.

However, the problem generation unit 42 does not generate a new combination optimization problem even if the acquisition unit 36 acquires a new market state packet during the solving process period from the start of the generation of the combination optimization problem to the output of the solution of the generated combination optimization problem. In addition, the preset cycle is longer than the time required from the start of the generation of the combination optimization problem to the output of the solution of the generated combination optimization problem. In addition, the preset cycle may not be every constant time, and may vary with time. The preset cycle may be performed once in a predetermined time. For example, the problem generation unit 42 may set a predetermined time in a predetermined time unit such as second, minute, hour, day, week, month, or year as a preset cycle, generate a combination optimization problem once, and cause the solver device 40 to solve the combination optimization problem.

The process execution unit 46 acquires a solution of the combination optimization problem from the solver device 40. In the present embodiment, the cost function includes N decision variables. The n-th decision variable among the N decision variables indicates whether a predetermined operation is performed on the n-th stock among the N stocks. For example, the n-th decision variable represents whether to trade the n-th stock among the N stocks. For example, the process execution unit 46 acquires the values (0 or 1) of the plurality of decision variables ($b_1$ to $b_N$) included in Expression (7) as a solution. The process execution unit 46 executes a process based on the acquired solution in response to acquiring the solution from the solver device 40.

For example, in a case where the solution of the combination optimization problem is acquired from the solver device 40, the process execution unit 46 generates output data including output information indicating that a predetermined operation is performed on at least one stock identified by the solution among the N stocks based on the acquired solution. Then, the process execution unit 46 outputs the output data to the first device.

In the present embodiment, in a case of acquiring the solution of the combination optimization problem from the solver device 40, the process execution unit 46 generates an order packet that is an example of output data. The order packet includes, as the output information, transaction information indicating that a buy order or a sell order, which is a predetermined operation, is to be placed for the stock corresponding to the decision variable having the value (1) indicating that the transaction is to be performed among the values of the plurality of decision variables ($b_1$ to $b_N$). Then, the process execution unit 46 outputs the generated order packet to the market server device 12 which is an example of the first device.

The prediction unit 48 acquires the output data generated by the process execution unit 46. The prediction unit 48 predicts data acquired by the information processing device 20 after the output data is given to the first device. Then, the prediction unit 48 generates prediction data representing the prediction data.

In the present embodiment, the prediction unit 48 acquires the order packet provided to the market server device 12 from the process execution unit 46. The prediction unit 48 predicts the market state packet output from the market server device 12 in response to the order packet being provided to the market server device 12.

The prediction data includes prediction information obtained by predicting input information about at least one target among a plurality of targets. The prediction data is represented by, for example, the same format as the data acquired by the information processing device 20.

In the embodiment, the prediction packet includes a predicted price obtained by predicting a transaction price of at least one stock of the N stocks. The prediction packet is represented in, for example, the same format as the market state packet acquired by the information processing device 20.

In a case where the prediction data is generated, the information processing device 20 executes a process on the generated prediction data in the same manner as the data. The acquisition unit 36 acquires the prediction data generated by the prediction unit 48 as one piece of data repeatedly given irregularly. In a case of acquiring the prediction data, the acquisition unit 36 rewrites the input value corresponding to the target related to the prediction information included in the acquired prediction data among the plurality of input values stored in the input memory 32 based on the prediction information included in the acquired prediction data.

In the present embodiment, in a case where the prediction packet is acquired, the information processing device 20 executes a process as in the case where the market state packet is acquired. In a case where the prediction packet is generated by the prediction unit 48, the acquisition unit 36 acquires the generated prediction packet as one of the market state packets irregularly and repeatedly provided. In a case of acquiring the prediction packet, the acquisition unit 36 rewrites a value corresponding to the transaction price for the stock indicated in the acquired prediction packet among the values corresponding to the transaction price for each of the N stocks stored in the input memory 32 based on the predicted price included in the acquired prediction packet.

Here, the input information included in the data acquired by the information processing device 20 changes by that the output data is given to the first device. In a case where the output data is given to the first device, the prediction unit 48 generates prediction information obtained by predicting input information included in data acquired after the output data is given to the first device to output prediction data including the generated prediction information.

In the present embodiment, the transaction price included in the market state packet acquired by the information processing device 20 changes by that the order packet is provided to the market server device 12. In a case of outputting the order packet to the market server device 12, the prediction unit 48 generates a predicted price obtained by predicting the transaction price included in the market state packet distributed after the order packet is provided to the market server device 12 to output a prediction packet including the generated predicted price.

The prediction unit 48 predicts the predicted price as follows, for example.

The market server device 12 establishes a transaction between the sell order and the buy order with the same price for each of the N stocks. For example, in the market, in a case where the number of unfulfilled sell orders is larger the number of unfulfilled buy orders, there is a high possibility that transactions are established in order from the unfulfilled buy order with the lowest price. In addition, in the market, in a case where the number of unfulfilled buy orders is larger the number of unfulfilled sell orders, there is a high possibility that transactions are established in order from the unfulfilled buy order with the lowest price.

Therefore, for example, in a case where, for a certain stock, the number of unfulfilled sell orders is larger than the number of unfulfilled buy orders, when the information processing device 20 outputs an order packet of the sell order at the same price as the unfulfilled buy order with the lowest price, there is a high possibility that the transaction price included in the market state packet to be distributed next by the market server device 12 is the same price as the unfulfilled buy order with the second lowest price.

Therefore, in the present embodiment, the prediction unit 48 generates the predicted price obtained by predicting the transaction price included in the next market state packet for the stock indicated in the transaction information included in the order packet based on the indication information for each of the N stocks stored in the indication information memory 34. Then, the prediction unit 48 outputs a prediction packet including the generated predicted price for the stock indicated in the transaction information included in the order packet. However, the market state packet distributed from the market server device 12 is also affected by an order packet output from another client device 14 other than the information processing device 20. Therefore, the prediction unit 48 cannot accurately predict the transaction price included in the next market state packet.

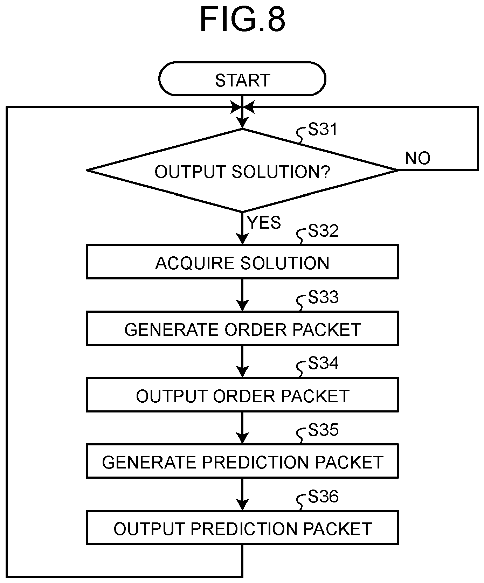

FIG. 8 is a flowchart illustrating a procedure of a process of the process execution unit 46 and the prediction unit 48 according to the first embodiment. The process execution unit 46 and the prediction unit 48 execute processing according to the procedure illustrated in FIG. 8.

First, in S31, the process execution unit 46 determines whether a solution has been output from the solver device 40. In a case where no solution is output from the solver device 40 (No in S31), the process execution unit 46 waits for the process in S31. In a case where the solution is output from the solver device 40 (Yes in S31), the process execution unit 46 advances the process to S32.

In S32, the process execution unit 46 acquires the solution output from the solver device 40. Subsequently, in S33, the process execution unit 46 generates an order packet based on the acquired solution. Subsequently, in S34, the process execution unit 46 transmits the order packet to the market server device 12.

Subsequently, in S35, the prediction unit 48 generates a prediction packet based on the order packet generated by the process execution unit 46. Subsequently, in S36, the prediction unit 48 outputs the generated prediction packet to the acquisition unit 36. Then, when the process of S36 is completed, the process execution unit 46 and the prediction unit 48 return the process to S31 and repeat the process from S31.

The process execution unit 46 can output the order packet to the market server device 12 by executing the processing in such a procedure. The prediction unit 48 can generate a prediction packet obtained by predicting the market state packet output from the market server device 12 based on the order packet, and output the prediction packet to the acquisition unit 36.

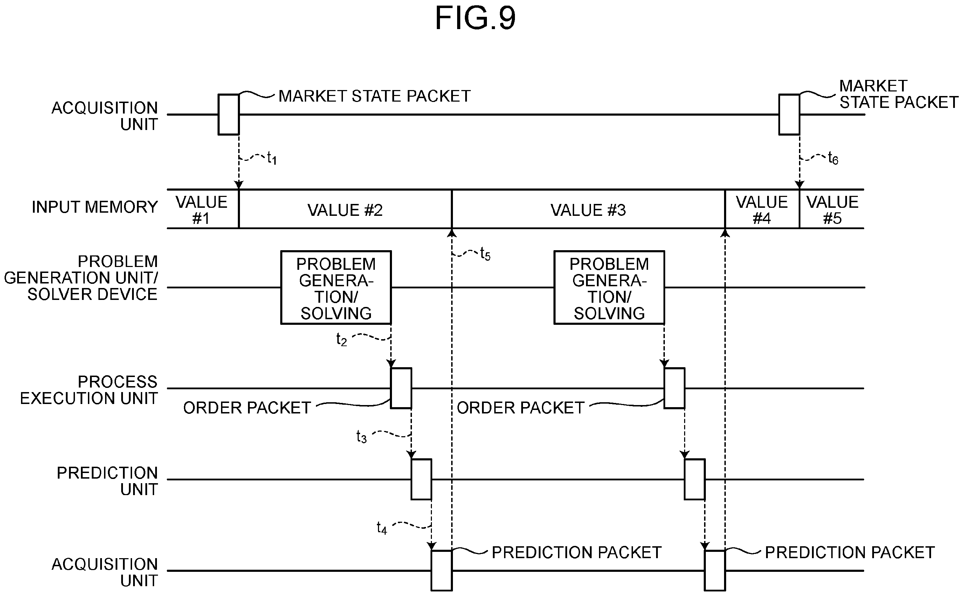

FIG. 9 is a timing chart illustrating processing timing of the information processing device 20.

In a case of acquiring the market state packet from the market server device 12, the acquisition unit 36 rewrites a value corresponding to the transaction price of the stock related to the transaction price included in the market state packet among the values corresponding to the transaction prices of the respective N stocks stored in the input memory 32. As a result, the value corresponding to the transaction price of each of the N stocks stored in the input memory 32 is changed ($t_1$ in FIG. 9).

The problem generation unit 42 generates a combination optimization problem based on the value corresponding to the transaction price of each of the N stocks stored in the input memory 32, and causes the solver device 40 to execute a solving process. The solver device 40 receives the combination optimization problem from the problem generation unit 42 and solves the received combination optimization problem. For example, the problem generation unit 42 and the solver device 40 execute the problem generation and the solving process at predetermined time intervals.

In a case where the solving process is completed, the solver device 40 gives the solution of the combination optimization problem to the process execution unit 46 ($t_2$ in FIG. 9). The process execution unit 46 generates an order packet to output the order packet to the market server device 12 in response to acquiring the solution of the combination optimization problem from the solver device 40.

The process execution unit 46 gives the generated order packet to the prediction unit 48 ($t_3$ in FIG. 9). In response to receiving the order packet, the prediction unit 48 generates a prediction packet obtained by predicting the market state packet distributed from the market server device 12. Then, the prediction unit 48 gives the generated prediction packet to the acquisition unit 36 ($t_4$ in FIG. 9).

In a case of acquiring the prediction packet from the prediction unit 48, the acquisition unit 36 rewrites a value according to the transaction price of the stock related to the predicted price included in the prediction packet based on the predicted price included in the prediction packet among the values according to the transaction price of each of the N stocks stored in the input memory 32. As a result, the value corresponding to the transaction price of each of the N stocks stored in the input memory 32 is changed ($t_5$ in FIG. 9).

On the other hand, the order packet transmitted from the process execution unit 46 is received by the market server device 12. In a case where the order packet transmitted from the process execution unit 46 is received, the market server device 12 performs matching with the order packet received from another client device 14, and establishes a transaction for the stock the transaction direction and the price of which are matched. In a case where the transaction is established, the market server device 12 generates a new market state packet reflecting the content of the established transaction and distributes the new market state packet to the plurality of client devices 14. Then, the acquisition unit 36 acquires the market state packet from the market server device 12, and changes the value corresponding to the transaction price of each of the N stocks stored in the input memory 32 based on the transaction price included in the acquired market state packet ($t_6$ in FIG. 9).

Here, the market server device 12 executes various processes from the reception of the order packet to the distribution of the market state packet reflecting the transaction corresponding to the received order packet. In addition, the market state packet and the order packet are transmitted via a network between the market server device 12 and the information processing device 20. For this reason, it takes a relatively long time until the information processing device 20 acquires the market state packet reflecting the transaction corresponding to the order packet after outputting the order packet.

On the other hand, the prediction packet is generated and transmitted inside the information processing device 20. Therefore, the information processing device 20 can acquire the prediction packet predicted based on the output order packet earlier than acquiring the market state packet reflecting the transaction according to the output order packet.

In a case where in the prediction packet, the market state packet reflecting the transaction according to the order packet can be predicted with high accuracy, the information processing device 20 can generate, based on the prediction packet, the order packet based on the solution of the combination optimization problem generated based on the market state packet. Therefore, the information processing device 20 can generate and output a new order packet reflecting the transaction situation of the market at an earlier stage by acquiring the prediction packet as one of the market state packets and executing the processing.

The market server device 12 preferentially perform matching on the order packet received earlier. Therefore, the information processing device 20 can perform the stock transaction more preferentially by generating and outputting a new order packet reflecting the transaction situation of the market at an earlier stage.

In this manner, the information processing device 20 according to the present embodiment generates prediction data obtained by predicting acquired data, and executes a process using the combination optimization problem generated based on the prediction data. As a result, the information processing device 20 according to the present embodiment can execute a process on data.

Moreover, the information processing device 20 according to the present embodiment can execute a process on data at an early stage. For example, the information processing device 20 generates a prediction packet in which the market state packet to be acquired is predicted, solves a combination optimization problem generated based on the prediction packet, and generates an order packet based on a solution of the obtained combination optimization problem. As a result, the information processing device 20 according to the present embodiment can execute the stock transaction based on the market state packet distributed from the market server device 12 at an earlier stage.

Second Embodiment

Next, a market system 10 according to the second embodiment will be described. Since the market system 10 according to the second embodiment has substantially the same function and configuration as those of the first embodiment, elements having substantially the same function and configuration are denoted by the same reference numerals, and detailed description thereof will be omitted except for differences. The same applies to the third and subsequent embodiments.

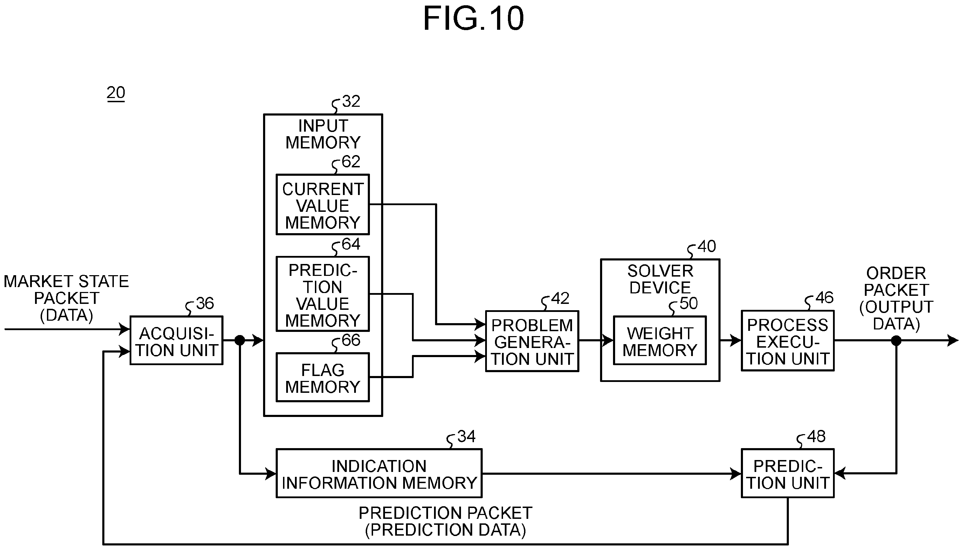

FIG. 10 is a diagram illustrating a configuration of the information processing device 20 according to the second embodiment.

In the present embodiment, the input memory 32 includes a current value memory 62 (first memory), a prediction value memory 64 (second memory), and a flag memory 66 (third memory).

The current value memory 62 stores a plurality of current values (a plurality of first values) corresponding to a plurality of targets on a one-to-one basis. The plurality of current values represents a plurality of input values on which the plurality of weight values is based. In the present embodiment, the current value memory 62 stores N current values corresponding to N stocks on a one-to-one basis. The n-th current value among the N current values corresponds to the n-th stock. Note that the current value is a value corresponding to the latest transaction stock price at the current time. For example, even in a case where a certain stock is traded yesterday and the price fluctuates, in a case where there is no transaction thereafter, the value corresponding to the transaction stock price of yesterday is the current value.

The prediction value memory 64 stores a plurality of prediction values (a plurality of second values) corresponding to a plurality of targets on a one-to-one basis. The plurality of prediction values represents a plurality of input values on which the plurality of weight values is based. In the present embodiment, the prediction value memory 64 stores N prediction values corresponding to N stocks on a one-to-one basis. The n-th prediction value among the N prediction values corresponds to the n-th stock.

The flag memory 66 stores a plurality of flags corresponding to a plurality of flags on a one-to-one basis. In the present embodiment, the flag memory 66 stores N flags corresponding to N flags on a one-to-one basis. The n-th flag among the N flags corresponds to the n-th current value stored in the current value memory 62 and the n-th prediction value stored in the prediction value memory 64. Each of the N flags indicates whether the corresponding prediction value among the N prediction values stored in the prediction value memory 64 has been written later than the corresponding current value among the N current values stored in the current value memory 62. The n-th flag indicates whether the n-th prediction value is written later than the n-th current value.

For example, each of the flags is 1 in a case where the prediction value is written later than the current value. In addition, each of the flags is 0 in a case where the prediction value is not written later than the current value, namely, in a case where the current value is written later than the prediction value.

In the present embodiment, in a case of acquiring data, the acquisition unit 36 rewrites a current value corresponding to a target related to input information included in the acquired data among a plurality of current values stored in the current value memory 62 based on input information included in the acquired data. In a case of acquiring the market state packet including the transaction price of the n-th stock, the acquisition unit 36 rewrites the n-th current value among the N current values stored in the current value memory 62 to a value corresponding to the transaction price included in the acquired market state packet.

In the present embodiment, in a case of acquiring the prediction data, the acquisition unit 36 rewrites the prediction value corresponding to the target related to the prediction information included in the acquired prediction data among the plurality of prediction values stored in the prediction value memory 64 based on the prediction information included in the acquired prediction data. In a case of acquiring the prediction packet including the predicted price of the n-th stock, the acquisition unit 36 rewrites the n-th prediction value among the N prediction values stored in the prediction value memory 64 to a value corresponding to the predicted price included in the acquired prediction packet.

In a case of acquiring data and writing any current value among the plurality of current values stored in the current value memory 62 based on the acquired data, the acquisition unit 36 sets a flag corresponding to the written current value among the plurality of flags stored in the flag memory 66 to a value (for example, 0) indicating that the prediction value is not written later than the current value. For example, in a case of acquiring a market state packet including a transaction price of an n-th stock and writing an n-th current value based on the acquired market state packet, the acquisition unit 36 sets the n-th flag to a value (for example, 0) indicating that the n-th prediction value is not written later than the n-th current value.

In a case of acquiring the prediction data and writing any one of the plurality of prediction values stored in the prediction value memory 64 based on the acquired prediction data, the acquisition unit 36 sets the flag corresponding to the written prediction value among the plurality of flags stored in the flag memory 66 to a value (for example, 1) indicating that the prediction value is written later than the current value. For example, in a case of acquiring a prediction packet including a predicted price of an n-th stock and writing an n-th prediction value based on the acquired prediction packet, the acquisition unit 36 sets the n-th flag to a value (for example, 1) indicating that the n-th prediction value is written later than the n-th current value.

In a case of acquiring a plurality of input values from the input memory 32 to generate a combination optimization problem, the problem generation unit 42 refers to a corresponding flag among the plurality of flags for each of the input values, and determines which one of the current value and the prediction value has been newly written. For each of the input values, the problem generation unit 42 reads a value of newly written one of the current value and the prediction value from the current value memory 62 or the prediction value memory 64, and sets the read value as the corresponding input value. In a case of acquiring the n-th input value, the problem generation unit 42 refers to the n-th flag, reads a value of newly written one of the n-th current value and the n-th prediction value from the current value memory 62 or the prediction value memory 64, and sets the read value as the n-th input value. Then, the problem generation unit 42 generates a combination optimization problem based on the plurality of input values read in this manner.

The information processing device 20 according to the second embodiment can determine whether the predicted value is included in the plurality of input values serving as the generation source of the generated combination optimization problem. As a result, the information processing device 20 according to the second embodiment can change the content of processing in the process execution unit 46 or change the magnitude of the risk in a case where the risk processing is performed in the process execution unit 46, for example, according to whether the predicted value is included.

Third Embodiment

Next, a market system 10 according to the third embodiment will be described.

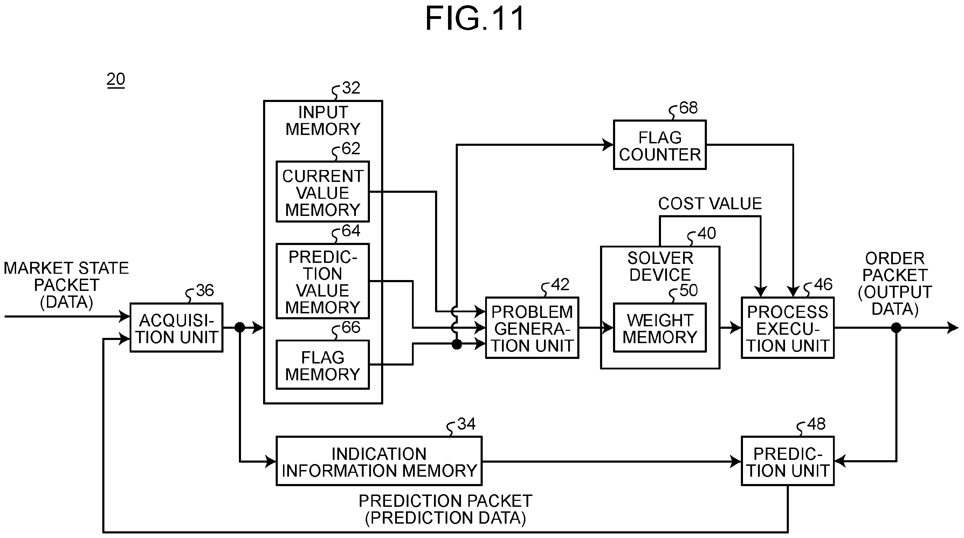

FIG. 11 is a diagram illustrating a configuration of an information processing device 20 according to the third embodiment. The information processing device 20 according to the third embodiment further includes a flag counter 68.

The flag counter 68 reads a plurality of flags stored in the flag memory 66 in a case where a plurality of input values is read from the input memory 32 by the problem generation unit 42 for generating a combination optimization problem. Then, the flag counter 68 counts the number of input values based on the prediction information included in the prediction data among the plurality of input values read from the input memory 32 for generating the combination optimization problem. In the present embodiment, the flag counter 68 counts the number of input values based on the predicted price included in the prediction packet among the N input values read from the input memory 32 for generating the combination optimization problem.

For example, in a case where the market server device 12 trades N stocks, where N is an integer of two or more, the current value memory 62 stores N current values, the prediction value memory 64 stores N prediction values, and the flag memory 66 stores N flags. An i-th flag among the N flags is defined as flgi, where i is an integer of one or more and N or less. $flg_i$ represents 1 in a case where the i-th prediction value among the N prediction values is written later than the i-th current value among the N current values, and represents 0 in a case where the i-th current value is written later than the i-th prediction value.

In this case, the flag counter 68 reads the values of the N flags from the flag memory 66 at the timing when the problem generation unit 42 starts generating the combination optimization problem, executes the operation of the expression (8), and calculates the number (T) of input values based on the predicted price included in the prediction packet among the N flags.

$$T = \sum_{i=1}^{N} flg_i \qquad \cdots (8)$$

The flag counter 68 counts the number of flags that is the value (for example, 1) indicating that the prediction value is written later than the current value among the plurality of flags stored in the flag memory 66, thereby acquiring the number of input values based on the prediction information included in the prediction data. The flag counter 68 gives the acquired number to the process execution unit 46.

In a case of outputting a solution, the solver device 40 calculates a cost value. The cost value is a value obtained by substituting a solution into a plurality of decision variables included in the cost function of the combination optimization problem. The solver device 40 gives the calculated cost value to the process execution unit 46.

In a case of outputting the output data, the process execution unit 46 stops outputting the output data to the first device based on the number of input values based on the prediction information included in the prediction data. For example, the process execution unit 46 calculates an evaluation value obtained by adding a cost value to a value obtained by multiplying the number by a predetermined coefficient. Then, the process execution unit 46 outputs the output data to the first device in a case where the evaluation value is equal to or less than a predetermined threshold value, and stops outputting the output data to the first device in a case where the evaluation value is larger than the predetermined threshold value.

For example, in a case where the order packet is generated, the process execution unit 46 calculates the evaluation value ($E_1$) represented by Expression (9). In Expression (9), C represents a cost value output from the solver device 40. $C_f$ represents a predetermined coefficient. T represents the number of input values based on the predicted price included in the prediction packet.

$$E_1 = C + (C_f \times T) \quad \ldots (9)$$

Then, the process execution unit 46 outputs the order packet to the market server device 12 in a case where the calculated evaluation value ($E_1$) is equal to or less than a predetermined threshold value. The process execution unit 46 stops outputting the order packet to the market server device 12 in a case where the calculated evaluation value ($E_1$) is larger than a predetermined threshold value.

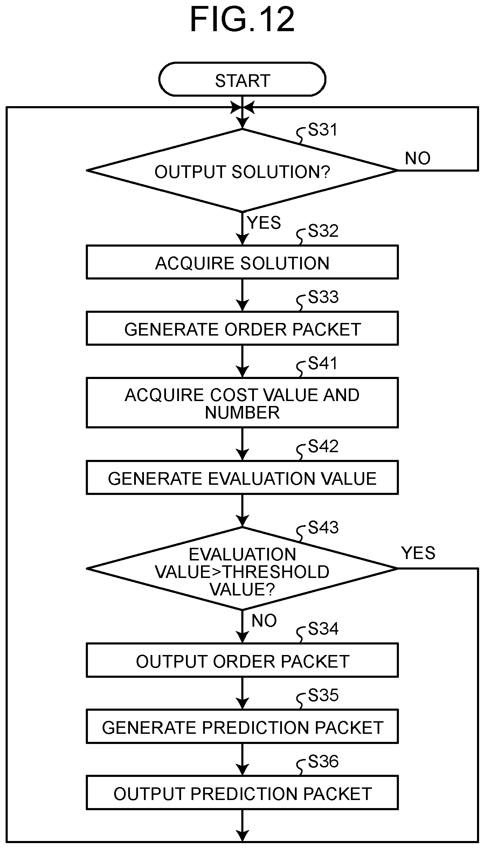

FIG. 12 is a flowchart illustrating a procedure of a process of the process execution unit 46 and the prediction unit 48 according to the third embodiment. The process execution unit 46 and the prediction unit 48 according to the third embodiment execute the process in the procedure illustrated in FIG. 12.

In S31 to S33, the process execution unit 46 executes a process similar to the process illustrated in FIG. 8.

Following S33, the process execution unit 46 advances the process to S41. In S41, the process execution unit 46 acquires the cost value (C) from the solver device 40, and acquires the number (T) of input values based on the predicted price included in the prediction packet calculated by the flag counter 68.

Subsequently, in S42, the process execution unit 46 calculates an evaluation value ($E_1$) based on the cost value (C) and the number (T). Subsequently, in S43, the process execution unit 46 determines whether the evaluation value ($E_1$) is larger than a predetermined threshold value. In a case where the evaluation value ($E_1$) is larger than the threshold value (Yes in S43), the process execution unit 46 skips the process in S34 to S36 and returns the process to S31. In a case where the evaluation value (E) is equal to or less than the threshold value (No in S43), the process execution unit 46 advances the process to S34. Then, the process execution unit 46 executes the process same as the process illustrated in FIG. 8 after S34.

The information included in the data (the market state packet in the present embodiment) acquired by the information processing device 20 changes in response to the output data (the order packet in the present embodiment) output by the information processing device 20 being given to the first device (the market server device 12 in the present embodiment). However, the data acquired by the information processing device 20 is affected by data other than the output data output by the information processing device 20, and the included information changes. Therefore, the prediction data (the prediction packet in the present embodiment) generated by the information processing device 20 is not guaranteed to be the same as the data to be acquired next. The information processing device 20 according to the present embodiment can switch whether to output the output data according to the number of input values based on the prediction data that is not guaranteed to be the same as the data to be acquired next among the plurality of input values on which generation of the combination optimization problem is based. As a result, the information processing device 20 according to the present embodiment can stop outputting the output data generated based on the solution with relatively low reliability and prevent the output of the processing result with low reliability.

Fourth Embodiment

Next, a market system 10 according to the fourth embodiment will be described.

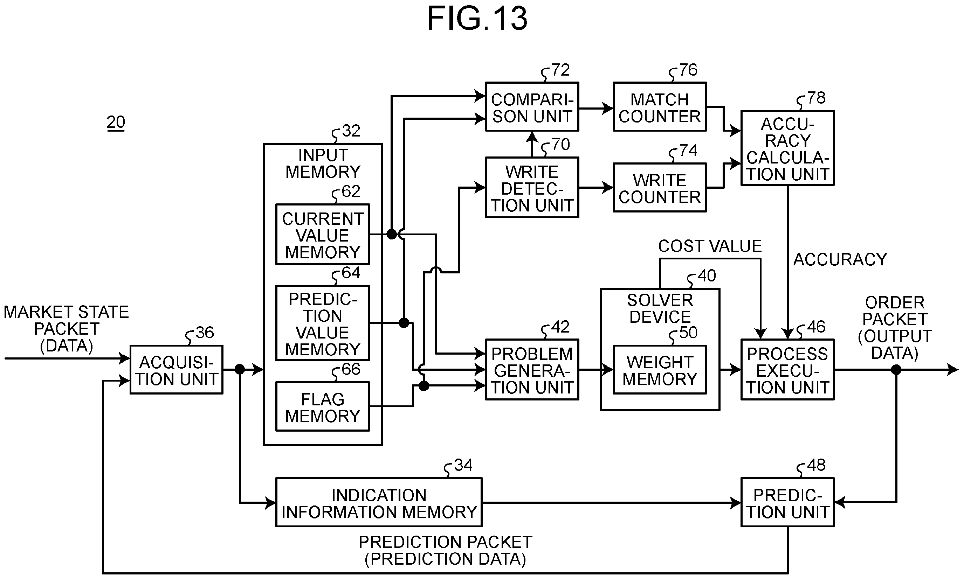

FIG. 13 is a diagram illustrating a configuration of an information processing device 20 according to the fourth embodiment. The information processing device 20 according to the fourth embodiment further includes a write detection unit 70, a comparison unit 72, a write counter 74 (first counter), a match counter 76 (second counter), and an accuracy calculation unit 78.

After the prediction value is written in the prediction value memory 64, the write detection unit 70 detects whether the corresponding current value among the plurality of current values is written in the current value memory 62. For example, the write detection unit 70 detects whether the n-th current value has been written in the current value memory 62 after the n-th prediction value has been written in the prediction value memory 64.

In a case where the n-th prediction value is written in the prediction value memory 64, the acquisition unit 36 sets the n-th flag stored in the flag memory 66 to a value (for example, 1) indicating that the prediction value is written later than the current value. For example, in a case where the n-th current value is written in the current value memory 62, the acquisition unit 36 sets the n-th flag stored in the flag memory 66 to a value (for example, 0) indicating that the prediction value is not written later than the current value.

Therefore, the write detection unit 70 detects a flag in which the n-th flag has changed from a value (for example, 1) indicating that the prediction value has been written later than the current value to a value (for example, 0) indicating that the prediction value has not been written later than the current value. As a result, the write detection unit 70 can detect whether the n-th current value has been written in the current value memory 62 after the n-th prediction value has been written in the prediction value memory 64.

The comparison unit 72 compares whether the n-th prediction value written in the prediction value memory 64 matches the n-th current value written in the current value memory 62 after the n-th prediction value is written in the prediction value memory 64. For example, in a case where the n-th flag has changed from a value (for example, 1) indicating that the prediction value has been written later than the current value to a value (for example, 0) indicating that the prediction value has not been written later than the current value, the comparison unit 72 reads the n-th prediction value and the n-th current value. Then, the comparison unit 72 compares whether the read n-th prediction value matches the n-th current value. As a result, the comparison unit 72 can compare whether the n-th prediction value written in the prediction value memory 64 matches the n-th current value written in the current value memory 62 after the n-th prediction value is written in the prediction value memory 64. Note that the comparison unit 72 may determine that the read n-th prediction value and the n-th current value match if the difference between the read n-th prediction value and the n-th current value falls within a predetermined value range. For example, when the read n-th prediction value matches the n-th current value within a range of a minute error, the comparison unit 72 may determine that the read n-th prediction value matches the n-th current value.

The write counter 74 receives the detection result from the write detection unit 70, and counts the number of writes indicating the number of times the n-th current value is written in the current value memory 62 after the n-th prediction value is written in the prediction value memory 64. For example, the write counter 74 counts the number of writes accumulated from a predetermined start time.

The match counter 76 receives the comparison result from the comparison unit 72, and counts the number of matches, which is the number of times the n-th prediction value written in the prediction value memory 64 matches the n-th current value written in the current value memory 62 after the n-th prediction value is written in the prediction value memory 64. For example, the match counter 76 counts the number of matches accumulated from a predetermined start time.

The accuracy calculation unit 78 receives the number of writes from the write counter 74 and receives the number of matches from the match counter 76. The accuracy calculation unit 78 calculates accuracy, which is a ratio of the number of matches to the number of writes, and gives the accuracy to the process execution unit 46.

In addition, in a case of outputting a solution, the solver device 40 calculates a cost value. The solver device 40 gives the calculated cost value to the process execution unit 46.

In a case of outputting the output data, the process execution unit 46 stops outputting the output data to the first device based on accuracy. For example, the process execution unit 46 calculates an evaluation value obtained by adding a cost value to a value obtained by multiplying accuracy by a predetermined coefficient. Then, the process execution unit 46 outputs the output data to the first device in a case where the evaluation value is equal to or less than a predetermined threshold value, and stops outputting the output data to the first device in a case where the evaluation value is larger than the predetermined threshold value.

For example, in a case where the order packet is generated, the process execution unit 46 calculates an evaluation value ($E_2$) represented by Expression (10). In Expression (10), R represents accuracy. C represents a cost value output from the solver device 40. $C_f$ represents a predetermined coefficient.

$$E_2 = C + \{C_f \times (1 - R)\} \quad \dots (10)$$

Then, the process execution unit 46 outputs the order packet to the market server device 12 in a case where the calculated evaluation value ($E_2$) is equal to or less than a predetermined threshold value. The process execution unit 46 stops outputting the order packet to the market server device 12 in a case where the calculated evaluation value ($E_2$) is larger than a predetermined threshold value.

Note that the information processing device 20 according to the fourth embodiment may further include the flag counter 68 illustrated in FIG. 12. The flag counter 68 gives the number (T) of input values based on the predicted price included in the prediction packet to the process execution unit 46. Then, in a case where the order packet is generated, the process execution unit 46 calculates the evaluation value ($E_2$) represented by Expression (11).

$$E_2 = C + \{C_f \times T \times (1 - R)\} \quad \dots (11)$$

In addition, the comparison unit 72 may further calculate a penalty value (P) that increases as a difference between the prediction value written in the prediction value memory 64 and the corresponding current value among the plurality of current values written in the current value memory 62 first after the prediction value is written in the prediction value memory 64 increases. Then, the comparison unit 72 gives the calculated penalty value (P) to the process execution unit 46 for each of the stocks.

In this case, for example, the process execution unit 46 may correct the accuracy (R) such that the larger the penalty value (P), the smaller the accuracy. For example, the process execution unit 46 may calculate the rate of change ($P_t/P_0$) in the penalty value represented by the ratio of the latest penalty value ($P_t$) to the penalty value ($P_0$) at a predetermined time such as the start of processing, and calculate the evaluation value ($E_2$) represented by Expression (12).

$$E_2 = C + [C_f \times T \times (1 - R) \times |1 - (P_t/P_0)|] \quad \dots (12)$$

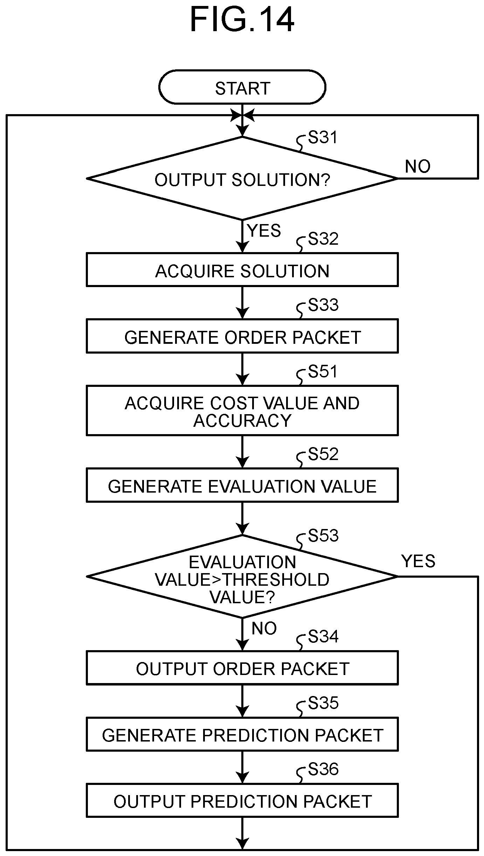

FIG. 14 is a flowchart illustrating a procedure of a process of the process execution unit 46 and the prediction unit 48 according to the fourth embodiment. The process execution unit 46 and the prediction unit 48 according to the fourth embodiment execute the process in the procedure illustrated in FIG. 14.

In S31 to S33, the process execution unit 46 executes a process similar to the process illustrated in FIG. 8.

Following S33, the process execution unit 46 advances the process to S51. In S51, the process execution unit 46 acquires the cost value (C) from the solver device 40 and acquires prediction accuracy (R) from the accuracy calculation unit 78.

Subsequently, in S52, the process execution unit 46 calculates the evaluation value ($E_2$) based on the cost value (C) and the prediction accuracy (R). Subsequently, in S53, the process execution unit 46 determines whether the evaluation value ($E_2$) is larger than a predetermined threshold value. In a case where the evaluation value ($E_2$) is larger than the threshold value (Yes in S53), the process execution unit 46 skips the process in S34 to S36 and returns the process to S31. In a case where the evaluation value ($E_2$) is equal to or less than the threshold value (No in S53), the process execution unit 46 advances the process to S34. Then, the process execution unit 46 executes the process same as the process illustrated in FIG. 8 after S34.

The information processing device 20 according to the present embodiment calculates, as the prediction accuracy (R), a ratio of the number of times the prediction value matches the current value to the number of times the prediction value has been written, in the plurality of input values on which generation of the combination optimization problem is based. The output data generated based on a solution having relatively high prediction accuracy (R) is highly reliable, but the output data generated based on a solution having relatively low prediction accuracy (R) is less reliable. Therefore, by switching whether to output the output data according to the prediction accuracy (R), the information processing device 20 according to the present embodiment can stop outputting the output data generated based on the solution with relatively low reliability and prevent the output of the processing result with low reliability.

Fifth Embodiment

Next, a control system 110 according to the fifth embodiment will be described.

In the first to fourth embodiments, an example in which the information processing device 20 is applied to the market system 10 is described. The information processing device 20 is not limited to the market system 10, and can be applied to other systems as long as the system executes a process using the combination optimization problem on data that changes with the lapse of time. For example, the information processing device 20 can also be applied to the control system 110 that controls a movement operation in a moving object.

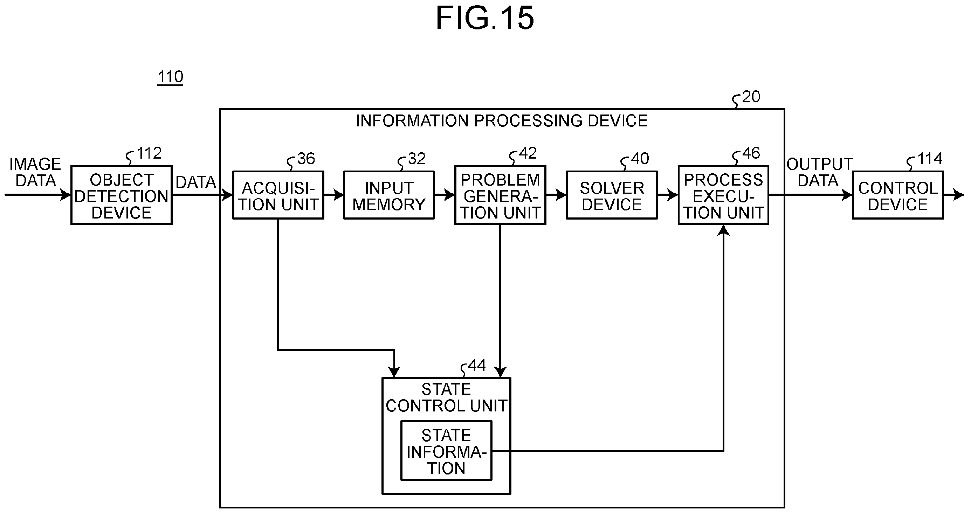

FIG. 15 is a diagram illustrating an example of a configuration of the control system 110 according to the fifth embodiment. The control system 110 controls, for example, a moving object that autonomously moves, such as an autonomous car, a drone, or a robot.

The control system 110 includes an object detection device 112, an information processing device 20, and a control device 114.

The object detection device 112 acquires, for example, image data from a camera that images the surroundings of the moving object to be controlled. The object detection device 112 may acquire sensor data from another sensor device in addition to the image data. The object detection device 112 detects coordinate data representing three-dimensional coordinates for each of one or more objects around the moving object based on the acquired image data, sensor data, and the like. Moreover, the object detection device 112 may also detect three-dimensional coordinates of the moving object itself to be controlled.

The object detection device 112 irregularly and repeatedly outputs, to the information processing device 20, data including identification information for identifying any one of one or more objects and coordinate data (input information) representing coordinates of the object identified by the identification information. Note that the input information may include, in addition to the coordinate data, other related information such as the moving speed, the acceleration, the moving direction, and the type of the object identified by the identification information.

The control device 114 acquires, from the information processing device 20, output data including output information indicating that a predetermined operation is performed on the moving object in order to control the moving object. The control device 114 controls the moving object based on the acquired output data.

Moreover, the output information may indicate that a predetermined operation is performed on any of one or more objects around the moving object. For example, the output information may include information indicating that information indicating movement control, a predetermined instruction, warning, or the like is given to any of one or more objects around the moving object. In this case, the output data includes identification information for identifying any object of one or more objects, and output information. Moreover, in a case where such output data is received, the control device 114 executes a predetermined operation on the object identified by the identification information included in the output data.

The information processing device 20 has the same configuration as that described in the first to fourth embodiments. However, the information processing device 20 may not include the indication information memory 34. Moreover, the prediction unit 48 may acquire information other than the output data in order to generate the prediction data.

The information processing device 20 generates a combination optimization problem based on data irregularly given from the object detection device 112, and causes the solver device 40 to solve the combination optimization problem. Then, the information processing device 20 acquires a solution of the combination optimization problem from the solver device 40, generates output data based on the solution in response to acquiring the solution, and outputs the generated output data to the control device 114 which is an example of the first device.

Moreover, the information processing device 20 generates prediction data obtained by predicting data acquired after the output data is given to the control device 114. Then, the information processing device 20 acquires the generated prediction data as one piece of the data irregularly given from the object detection device 112.

Such an information processing device 20 generates prediction data obtained by predicting acquired data, and executes a process using a combination optimization problem generated based on the prediction data. As a result, the information processing device 20 according to the present embodiment can execute a process on data at an early stage.

Hardware Configuration

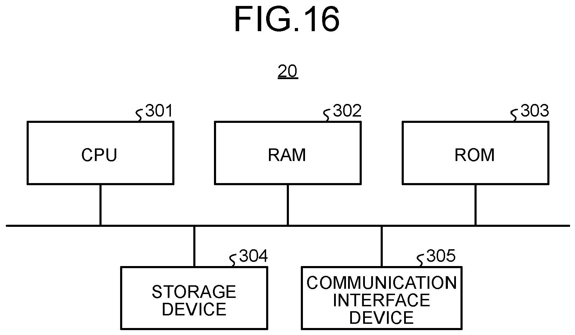

FIG. 16 is a diagram illustrating an example of a hardware configuration of the information processing device 20. The partial configuration not including the solver device 40 in the information processing device 20 is realized by a computer having a hardware configuration as illustrated in FIG. 16, for example. The information processing device 20 includes a central processing unit (CPU) 301, a random access memory (RAM) 302, a read only memory (ROM) 303, a storage device 304, and a communication interface device 305. These units are connected by a bus.

The CPU 301 (an example of a hardware processor) is one or more processors that execute arithmetic process, control process, and the like according to a program. The CPU 301 uses a predetermined region of the RAM 302 for a work region, and executes various processes in cooperation with programs stored in the ROM 303, the storage device 304, and so forth.

The RAM 302 is a memory such as a synchronous dynamic random access memory (SDRAM). The RAM 302 functions as a work region of the CPU 301. The ROM 303 is a memory that stores programs and various types of information in a non-rewritable manner.

The storage device 304 is a device that writes and reads data to and from a semiconductor storage medium such as a flash memory, a magnetically or optically recordable storage medium, or the like. The storage device 304 writes and reads data to and from the storage medium under the control of the CPU 301. The communication interface device 305 communicates with an external device via a network in accordance with control from the CPU 301.

The program executed by the computer causes the computer to function as the information processing device 20. This program is developed on the RAM 302 and executed by the CPU 301 (processor).

In addition, the program executed by the computer is recorded in and provided by a computer-readable recording medium such as a CD-ROM, a flexible disk, a CD-R, or a digital versatile disk (DVD) as a file in a format that can be installed or executed in the computer.

Moreover, the program may be stored on a computer connected to a network such as the Internet and provided by being downloaded via the network. Moreover, the program may be provided or distributed via a network such as the Internet. In addition, the program executed by the information processing device 20 may be provided by being incorporated in the ROM 303 or the like in advance.

The program for causing the computer to function as the information processing device 20 has a module configuration including, for example, an acquisition module, a problem generation module, a process execution module, and a prediction module. The program may further include a flag counter module, a write detection module, a comparison module, a write counter module, a match counter module, and an accuracy calculation module. This program is executed by the CPU 301 to load each module into the RAM 302, and causes the CPU 301 to function as the acquisition unit 36, the problem generation unit 42, the process execution unit 46, and the prediction unit 48. In a case where the CPU 301 is a plurality of processors, these units may be divided into and carried by a plurality of processors. This program may cause the CPU 301 to further function as the flag counter 68, the write detection unit 70, the comparison unit 72, the write counter 74, a match counter 76, and the accuracy calculation unit 78. In addition, this program causes the RAM 302 and the storage device 304 to function as the input memory 32 and the indication information memory 34. Note that part of or all these configurations may be configured by hardware.

Moreover, the solver device 40 may be implemented by one or more reconfigurable semiconductor devices such as a field-programmable gate array (FPGA). Moreover, the solver device 40 may be implemented by an electronic circuit including one or more CPUs, a microprocessor, a graphics processing unit (GPU), an application specific integrated circuit (ASIC), or circuits thereof. Moreover, the solver device 40 may be implemented by an information processing device such as a computer, a computer system configured by a plurality of computers or servers communicating with each other via a network, a PC cluster in which a plurality of computers executes information processing in cooperation, or the like.

Note that the solver device 40 may be incorporated in the information processing device 20. For example, the solver device 40 may be incorporated as an accelerator in part of the information processing device 20. Moreover, the solver device 40 may include some functions of the information processing device 20, for example, the problem generation unit 42.

Moreover, in a case where the information processing device 20 is implemented by a reconfigurable semiconductor device such as an FPGA, circuit information (configuration data) written in the reconfigurable semiconductor device to operate the reconfigurable semiconductor device as the information processing device 20 may be stored on a computer connected to a network such as the Internet and provided by being downloaded via the network. In addition, circuit information (configuration data) written in the reconfigurable semiconductor device in order to operate the reconfigurable semiconductor device as the information processing device 20 may be recorded in a computer-readable recording medium and provided.

Moreover, in a case where the information processing device 20 is realized by a semiconductor device such as an ASIC, circuit information representing a configuration of a circuit described in a hardware description language used for designing and manufacturing the information processing device 20 may be stored on a computer connected to a network such as the Internet, and may be provided by being downloaded via a network. Moreover, circuit information representing a configuration of a circuit described in a hardware description language used for designing and manufacturing the information processing device 20 may be provided by being recorded in a computer-readable recording medium.

While certain embodiments have been described, these embodiments have been presented by way of example only, and are not intended to limit the scope of the inventions. Indeed, the novel embodiments described herein may be embodied in a variety of other forms, moreover, various omissions, substitutions, and changes in the form of the embodiments described herein may be made without departing from the spirit of the inventions. The accompanying claims and their equivalents are intended to cover such forms or modifications as would fall within the scope and spirit of the inventions.

Supplement

The above-described embodiments can be summarized in the following technical schemes.

(Technical scheme 1)

An information processing device executing processing on data, the information processing device comprising: a hardware processor connected to memories and configured to

acquire the data,
generate a combination optimization problem based on the data, and cause a solver device to solve the combination optimization problem,
acquire a solution of the combination optimization problem from the solver device, generate output data based on the solution, and output the output data to a first device,
generate prediction data obtained by predicting data acquired after the output data is given to the first device, and acquire, in acquiring the data, the prediction data as one piece of the data.

(Technical scheme 2)

The information processing device according to the technical scheme 1, wherein

the hardware processor is configured to repeatedly acquire the data in acquiring the data, and
a value included in the data changes by that the output data is given to the first device.

(Technical scheme 3)

The information processing device according to the technical scheme 1 or 2, wherein the hardware processor is configured to, in generating the combination optimization problem, generate the combination optimization problem in response to acquiring the data or at a preset cycle, and cause the solver device to solve the combination optimization problem.

(Technical scheme 4)

The information processing device according to any one of the technical schemes 1 to 3, wherein

the cost function in the combination optimization problem includes N decision variables, where N is an integer of two or more, and a plurality of weight values,
a term included in the cost function is represented by multiplication of one or more decision variables of the N decision variables and one weight value of the plurality of weight values,
the memories includes an input memory to store N input values on which the plurality of weight values is based, and
the solver device includes a weight memory to store the plurality of weight values.

(Technical scheme 5)

The information processing device according to the technical scheme 4, wherein

an n-th input value, where n being an integer of one or more and N or less, among the N input values corresponds to an n-th target among the N targets,
the data includes input information about at least one of the N targets, and the hardware processor is configured to

rewrite, in acquiring the data, the n-th input value stored in the input memory on the basis of the input information related to the n-th target in a case where the data including the input information related to the n-th target is acquired, and
generate, in generating the combination optimization problem, the plurality of weight values on the basis of the N input values stored in the input memory and write the plurality of generated weight values in the weight memory.

(Technical scheme 6)

The information processing device according to the technical scheme 5, wherein

an n-th decision variable among the N decision variables indicates whether a predetermined operation is performed on the n-th target,
the output data includes output information indicating that the predetermined operation is performed on at least one of the N targets, the one being identified by the solution, and
the prediction data includes prediction information obtained by predicting the input information about the at least one of the N targets.

(Technical scheme 7)

The information processing device according to the technical scheme 6, wherein

the input memory includes

a first memory to store N first values, and
a second memory to store N second values,

an n-th first value among the N first values corresponds to the n-th target,
an n-th second value among the N second values corresponds to the n-th target, and
the hardware processor is configured to, in acquiring the data,

rewrite the n-th first value among the N first values stored in the first memory in a case where the data including the input information related to the n-th target is acquired, and
rewrite the n-th second value among the N first values stored in the second memory in a case where the prediction data including the prediction information related to the n-th target is acquired.

(Technical scheme 8)

The information processing device according to the technical scheme 7, wherein

the input memory further includes a third memory to store N flags,
an n-th flag among the N flags indicating whether the n-th second value is written later than the n-th first value, and
the hardware processor is configured to, in generating the combination optimization problem,
read either one of the n-th first value and the n-th second value, the either one being newly written, from the first memory or the second memory with making reference to the n-th flag, and
set the either one as the n-th input value.

(Technical scheme 9)

The information processing device according to any one of the technical schemes 6 to 8, wherein the hardware processor is configured to, in outputting the output data, stop outputting the output data to the first device on the basis of the number of input values based on the prediction information included in the prediction data among the N input values read from the input memory for generating the combination optimization problem.

(Technical scheme 10)

The information processing device according to the technical scheme 9, wherein

the solver device is configured to output a cost value obtained by substituting the solution into the cost function, and
the hardware processor is configured to, in outputting the output data,

calculate an evaluation value obtained by adding the cost value to a value obtained by multiplying the number of input values by a predetermined coefficient, and
stop output of the output data to the first device in accordance with the evaluation value.

(Technical scheme 11)

The information processing device according to the technical scheme 7 or 8, further comprising:

a first counter configured to count the number of writes indicating the number of times the n-th first value is written in the first memory after the n-th second value is written in the second memory; and
a second counter configured to count the number of times a difference between the n-th second value written in the second memory and the n-th first value written in the first memory falls within a predetermined range after the n-th second value is written in the second memory,
wherein the hardware processor is configured to, in outputting the output data, stop output of the output data to the first device on the basis of a ratio of the number of times the difference falls within the predetermined range to the number of writes.

(Technical scheme 12)

The information processing device according to the technical scheme 11, wherein

the solver device is configured to output a cost value obtained by substituting the solution into the cost function, and
the hardware processor is configured to, in outputting the output data,

calculate an evaluation value obtained by adding the cost value to a value obtained by multiplying the ratio by a predetermined coefficient, and
stop output of the output data to the first device in accordance with the evaluation value.

(Technical scheme 13)

The information processing device according to any one of the technical schemes 1 to 12, wherein

the hardware processor is configured to, in acquiring the data, acquire a market state packet as the data from a market server device serving to perform a transaction of N targets, the market state packet including a transaction price for at least one of the N targets,
an n-th decision variable, where n is an integer of one or more and N or less, among N decision variables included in the cost function in the combination optimization problem corresponds to an n-th target among the N targets, the n-th decision variable representing whether to trade the n-th target,
the hardware processor is configured to, in executing the process based on the solution,

determine, on the basis of the solution, whether to perform a transaction for each of the N targets, and
generate, as the output data, an order packet including transaction information about a target determined to be traded among the N targets and transmit the order packet to the market server device, and

the hardware processor is configured to, in generating the prediction data, generate, as the prediction data, a prediction packet including a predicted price obtained by predicting the transaction price for at least one target among the N targets.

(Technical scheme 14)

The information processing device according to the technical scheme 13, wherein

the market state packet includes, for at least one of the N targets, first information indicating a price and a quantity of an unfulfilled sell order and a price and a quantity of an unfulfilled buy order, and
the hardware processor is configured to, in generating the prediction data,

predict, on the basis of the first information, the transaction price after a transaction by the order packet is established for the target to be traded in the order packet, and
generate the prediction packet including the predicted transaction price.

(Technical scheme 15)

The information processing device according to any one of the technical schemes 1 to 12, wherein

the data includes coordinate data representing coordinates of at least one object,
the hardware processor is configured to, in executing the process based on the solution, output, to a control device, the output data including output information for controlling a moving object, and
the hardware processor is configured to, in generating the prediction data,

predict a motion of the moving object after outputting the output data to the control device, and
generate, on the basis of the predicted motion of the moving object, the prediction data including the coordinate data obtained by predicting coordinates of the at least one object.

(Technical scheme 16)

The information processing device according to any one of the technical schemes 1 to 15, wherein each decision variable of the plurality of decision variables included in the cost function in the combination optimization problem is a binary discrete variable.

(Technical scheme 17)

The information processing device according to the technical scheme 16, wherein the cost function is a quadratic function of the plurality of decision variables.

(Technical scheme 18)

The information processing device according to the technical scheme 17, wherein the combination optimization problem is a quadratic unconstrained binary optimization (QUBO) problem.

(Technical scheme 19)

The information processing device according to the technical scheme 18, wherein the solver device is configured to solve the QUBO problem as an Ising problem.

(Technical scheme 20)

The information processing device according to the technical scheme 19, wherein the solver device is configured to solve the Ising problem by a simulated bifurcation algorithm.

(Technical scheme 21)

The information processing device according to the technical scheme 17, wherein

the cost function is a cubic or higher function of the plurality of decision variables, and
the combination optimization problem is a higher order binary optimization (HUBO) problem.

(Technical scheme 22)

An information processing method implemented by a computer executing processing on data, the method comprising:

acquiring the data;
generating a combination optimization problem based on the data, and causing a solver device to solve the combination optimization problem;
acquiring a solution of the combination optimization problem from the solver device, generating output data based on the solution, and outputting the output data to a first device;
generating prediction data obtained by predicting data acquired after the output data is given to the first device; and
acquiring, in the acquiring the data, the prediction data as one piece of the data.

(Technical scheme 23)

A computer program comprising computer-readable instructions to be executed by a computer, the instructions causing the computer to:

acquire the data;
generate a combination optimization problem based on the data, and cause a solver device to solve the combination optimization problem;
acquire a solution of the combination optimization problem from the solver device, generate output data based on the solution, and output the output data to a first device;
generate prediction data obtained by predicting data acquired after the output data is given to the first device; and
acquire, in acquiring the data, the prediction data as one piece of the data.

(Technical scheme 24)

Circuit information described in a hardware description language, the circuit information representing a configuration of a circuit, the circuit information causing the circuit to function as an information processing device executing processing on data, the processing comprising:

acquiring the data;
generating a combination optimization problem based on the data, and causing a solver device to solve the combination optimization problem;
acquiring a solution of the combination optimization problem from the solver device, generating output data based on the solution, and outputting the output data to a first device;
generating prediction data obtained by predicting data acquired after the output data is given to the first device; and
acquiring, in the acquiring the data, the prediction data as one piece of the data.

(Technical scheme 25)

Circuit information written in a reconfigurable semiconductor device for operating the reconfigurable semiconductor device, the circuit information causing the reconfigurable semiconductor device to function as an information processing device executing processing on data, the processing comprising:

acquiring the data;
generating a combination optimization problem based on the data, and causing a solver device to solve the combination optimization problem;
acquiring a solution of the combination optimization problem from the solver device, generating output data based on the solution, and outputting the output data to a first device;
generating prediction data obtained by predicting data acquired after the output data is given to the first device; and
acquiring, in the acquiring the data, the prediction data as one piece of the data.

**Claims**

1. An information processing device (20) executing processing on data, the information processing device comprising: a hardware processor (301) connected to memories and configured to

acquire the data,
generate a combination optimization problem based on the data, and cause a solver device (40) to solve the combination optimization problem,
acquire a solution of the combination optimization problem from the solver device (40), generate output data based on the solution, and output the output data to a first device (12),
generate prediction data obtained by predicting data acquired after the output data is given to the first device (12), and
acquire, in acquiring the data, the prediction data as one piece of the data.

2. The information processing device according to claim 1, wherein

the hardware processor (301) is configured to repeatedly acquire the data in acquiring the data, and
a value included in the data changes by that the output data is given to the first device (12).

3. The information processing device according to claim 1, wherein the hardware processor (301) is configured to, in generating the combination optimization problem, generate the combination optimization problem in response to acquiring the data or at a preset cycle, and cause the solver device (40) to solve the combination optimization problem.

4. The information processing device according to claim 1, wherein

the cost function in the combination optimization problem includes N decision variables, where N is an integer of two or more, and a plurality of weight values,
a term included in the cost function is represented by multiplication of one or more decision variables of the N decision variables and one weight value of the plurality of weight values,
the memories includes an input memory (32) to store N input values on which the plurality of weight values is based, and
the solver device (40) includes a weight memory (50) to store the plurality of weight values.

5. The information processing device according to claim 4, wherein

an n-th input value, where n being an integer of one or more and N or less, among the N input values corresponds to an n-th target among the N targets,
the data includes input information about at least one of the N targets, and
the hardware processor (301) is configured to

rewrite, in acquiring the data, the n-th input value stored in the input memory on the basis of the input information related to the n-th target in a case where the data including the input information related to the n-th target is acquired, and
generate, in generating the combination optimization problem, the plurality of weight values on the basis of the N input values stored in the input memory (32) and write the plurality of generated weight values in the weight memory (50).

6. The information processing device according to claim 5, wherein

an n-th decision variable among the N decision variables indicates whether a predetermined operation is performed on the n-th target,
the output data includes output information indicating that the predetermined operation is performed on at least one of the N targets, the one being identified by the solution, and
the prediction data includes prediction information obtained by predicting the input information about the at least one of the N targets.

7. The information processing device according to claim 6, wherein

the input memory (32) includes

a first memory (62) to store N first values, and
a second memory (64) to store N second values,

an n-th first value among the N first values corresponds to the n-th target,
an n-th second value among the N second values corresponds to the n-th target, and
the hardware processor (301) is configured to, in acquiring the data,

rewrite the n-th first value among the N first values stored in the first memory (62) in a case where the data including the input information related to the n-th target is acquired, and
rewrite the n-th second value among the N first values stored in the second memory (64) in a case where the prediction data including the prediction information related to the n-th target is acquired.

8. The information processing device according to claim 7, wherein

the input memory (32) further includes a third memory (66) to store N flags,
an n-th flag among the N flags indicating whether the n-th second value is written later than the n-th first value, and
the hardware processor (301) is configured to, in generating the combination optimization problem,

read either one of the n-th first value and the n-th second value, the either one being newly written, from the first memory (62) or the second memory (64) with making reference to the n-th flag, and
set the either one as the n-th input value.

9. The information processing device according to claim 6 to 8, wherein the hardware processor (301) is configured to, in outputting the output data, stop outputting the output data to the first device (12) on the basis of the number of input values based on the prediction information included in the prediction data among the N input values read from the input memory (32) for generating the combination optimization problem.

10. The information processing device according to claim 9, wherein

the solver device (40) is configured to output a cost value obtained by substituting the solution into the cost function, and
the hardware processor (301) is configured to, in outputting the output data,

calculate an evaluation value obtained by adding the cost value to a value obtained by multiplying the number of input values by a predetermined coefficient, and
stop output of the output data to the first device (12) in accordance with the evaluation value.

11. The information processing device according to claim 7 or 8, further comprising:

a first counter (74) configured to count the number of writes indicating the number of times the n-th first value is written in the first memory (62) after the n-th second value is written in the second memory (64); and
a second counter (76) configured to count the number of times a difference between the n-th second value written in the second memory and the n-th first value written in the first memory (62) falls within a predetermined range after the n-th second value is written in the second memory (64),
wherein the hardware processor (301) is configured to, in outputting the output data, stop output of the output data to the first device (12) on the basis of a ratio of the number of times the difference falls within the predetermined range to the number of writes.

12. The information processing device according to claim 11, wherein

the solver device (40) is configured to output a cost value obtained by substituting the solution into the cost function, and
the hardware processor (301) is configured to, in outputting the output data,

calculate an evaluation value obtained by adding the cost value to a value obtained by multiplying the ratio by a predetermined coefficient, and
stop output of the output data to the first device (12) in accordance with the evaluation value.

13. The information processing device according to any one of claims 1 to 12, wherein

the hardware processor (301) is configured to, in acquiring the data, acquire a market state packet as the data from a market server device (12) serving to perform a transaction of N targets, the market state packet including a transaction price for at least one of the N targets,
an n-th decision variable, where n is an integer of one or more and N or less, among N decision variables included in the cost function in the combination optimization problem corresponds to an n-th target among the N targets, the n-th decision variable representing whether to trade the n-th target,
the hardware processor (301) is configured to, in executing the process based on the solution,

determine, on the basis of the solution, whether to perform a transaction for each of the N targets, and
generate, as the output data, an order packet including transaction information about a target determined to be traded among the N targets and transmit the order packet to the market server device, and

the hardware processor (301) is configured to, in generating the prediction data, generate, as the prediction data, a prediction packet including a predicted price obtained by predicting the transaction price for at least one target among the N targets.

14. An information processing method implemented by a computer executing processing on data, the method comprising:

acquiring the data;
generating a combination optimization problem based on the data, and causing a solver device to solve the combination optimization problem;
acquiring a solution of the combination optimization problem from the solver device, generating output data based on the solution, and outputting the output data to a first device;
generating prediction data obtained by predicting data acquired after the output data is given to the first device; and
acquiring, in the acquiring the data, the prediction data as one piece of the data.

15. A computer program comprising computer-readable instructions to be executed by a computer, the instructions causing the computer to:

acquire the data;
generate a combination optimization problem based on the data, and cause a solver device to solve the combination optimization problem;
acquire a solution of the combination optimization problem from the solver device, generate output data based on the solution, and output the output data to a first device;
generate prediction data obtained by predicting data acquired after the output data is given to the first device; and
acquire, in acquiring the data, the prediction data as one piece of the data.

16. Circuit information described in a hardware description language, the circuit information representing a configuration of a circuit, the circuit information causing the circuit to function as an information processing device executing processing on data, the processing comprising:

acquiring the data;
generating a combination optimization problem based on the data, and causing a solver device to solve the combination optimization problem;
acquiring a solution of the combination optimization problem from the solver device, generating output data based on the solution, and outputting the output data to a first device;
generating prediction data obtained by predicting data acquired after the output data is given to the first device; and
acquiring, in the acquiring the data, the prediction data as one piece of the data.

17. Circuit information written in a reconfigurable semiconductor device for operating the reconfigurable semiconductor device, the circuit information causing the reconfigurable semiconductor device to function as an information processing device executing processing on data, the processing comprising:

acquiring the data;
generating a combination optimization problem based on the data, and causing a solver device to solve the combination optimization problem;
acquiring a solution of the combination optimization problem from the solver device, generating output data based on the solution, and outputting the output data to a first device;
generating prediction data obtained by predicting data acquired after the output data is given to the first device; and
acquiring, in the acquiring the data, the prediction data as one piece of the data.

# FIG.1

N-size problem

# FIG.2

| N DECISION VARIABLES | 2×N INTERNAL VARIABLES |
|---|---|
| $s_1$ | $x_1$  $y_1$ |
| $s_2$ | $x_2$  $y_2$ |
| $s_3$ | $x_3$  $y_3$ |
| $s_4$ | $x_4$  $y_4$ |
| $s_5$ | $x_5$  $y_5$ |
| $s_6$ | $x_6$  $y_6$ |
| $s_i$ | $x_i$  $y_i$ |
| $s_N$ | $x_N$  $y_N$ |

# FIG.3

```
                    START

              ACQUIRE PROBLEM          ~S11

                 INITIALIZE            ~S12

              REPEATED PROCESS         ~S13

           EXECUTE y UPDATE PROCESS    ~S14

           EXECUTE x UPDATE PROCESS    ~S15

            EXECUTE WALL PROCESS       ~S16

              REPEATED PROCESS         ~S17

                  OUTPUT               ~S18

                    END
```

# FIG.4

```
                        J, h        ISING
                      ────────►    MACHINE

    HOST                            s1 ○
    DEVICE                          s2 ○
                                    s3 ○
                        s^opt       s4 ○
                      ◄────────     s5 ○
                                    s6 ○
```

# FIG.5

# FIG.6

# FIG.7

EP 4 498 291 A1

# FIG.8

```
           ┌──────────────────────┐
           │        START         │
           └──────────────────────┘
                       │
                       ▼         ⌐S31
              ◇─────────────────◇
             ◇                   ◇────── NO
            ◇  OUTPUT SOLUTION?   ◇
             ◇                   ◇
              ◇─────────────────◇
                       │ YES
                       ▼         ⌐S32
           ┌──────────────────────┐
           │    ACQUIRE SOLUTION   │
           └──────────────────────┘
                       │         ⌐S33
                       ▼
           ┌──────────────────────┐
           │ GENERATE ORDER PACKET │
           └──────────────────────┘
                       │         ⌐S34
                       ▼
           ┌──────────────────────┐
           │  OUTPUT ORDER PACKET  │
           └──────────────────────┘
                       │         ⌐S35
                       ▼
           ┌──────────────────────────┐
           │ GENERATE PREDICTION PACKET│
           └──────────────────────────┘
                       │         ⌐S36
                       ▼
           ┌──────────────────────────┐
           │ OUTPUT PREDICTION PACKET  │
           └──────────────────────────┘
```

# FIG.9

EP 4 498 291 A1

# FIG.10

EP 4 498 291 A1

# FIG.11

EP 4 498 291 A1

# FIG.12

```
                    ┌─────────────┐
                    │   START     │
                    └──────┬──────┘
                           │
                           ▼              ⌇S31
              ╱────────────────────────╲        NO
             ╱      OUTPUT SOLUTION?     ╲──────────►
             ╲                          ╱
              ╲────────────────────────╱
                           │ YES
                           ▼              ⌇S32
              ┌────────────────────────┐
              │     ACQUIRE SOLUTION    │
              └────────────┬───────────┘
                           ▼              ⌇S33
              ┌────────────────────────┐
              │  GENERATE ORDER PACKET  │
              └────────────┬───────────┘
                           ▼              ⌇S41
              ┌────────────────────────┐
              │  ACQUIRE COST VALUE AND │
              │         NUMBER          │
              └────────────┬───────────┘
                           ▼              ⌇S42
              ┌────────────────────────┐
              │ GENERATE EVALUATION VALUE│
              └────────────┬───────────┘
                           ▼              ⌇S43
              ╱────────────────────────╲        YES
             ╱      EVALUATION           ╲──────────►
             ╲   VALUE>THRESHOLD         ╱
              ╲      VALUE?             ╱
               ╲──────────────────────╱
                           │ NO
                           ▼              ⌇S34
              ┌────────────────────────┐
              │   OUTPUT ORDER PACKET   │
              └────────────┬───────────┘
                           ▼              ⌇S35
              ┌────────────────────────┐
              │ GENERATE PREDICTION PACKET│
              └────────────┬───────────┘
                           ▼              ⌇S36
              ┌────────────────────────┐
              │ OUTPUT PREDICTION PACKET│
              └────────────┬───────────┘
                           ▼
```

# FIG.13

EP 4 498 291 A1

# FIG.14

START

S31

OUTPUT SOLUTION? — NO

YES S32

ACQUIRE SOLUTION

S33

GENERATE ORDER PACKET

S51

ACQUIRE COST VALUE AND ACCURACY

S52

GENERATE EVALUATION VALUE

S53

EVALUATION VALUE>THRESHOLD VALUE? — YES

NO S34

OUTPUT ORDER PACKET

S35

GENERATE PREDICTION PACKET

S36

OUTPUT PREDICTION PACKET

FIG.15

# FIG.16

20

Europäisches
Patentamt

European
Patent Office

Office européen
des brevets

# EUROPEAN SEARCH REPORT

**Application Number**

EP 24 15 9779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOSUKE TATSUMURA ET AL: "Pairs-trading System using Quantum-inspired Combinatorial Optimization Accelerator for Optimal Path Search in Market Graphs", ARXIV.ORG, CORNELL UNIVERSITY LIBRARY, 201 OLIN LIBRARY CORNELL UNIVERSITY ITHACA, NY 14853, 12 July 2023 (2023-07-12), XP091561173, * abstract; sections 2.1, 3, 3.1, 3.2, 3.3, 4 Equations 2-4; figures 4, 5 * | 1-17 | INV. G06N5/01 |
| A | KOSUKE TATSUMURA ET AL: "Real-time Trading System based on Selections of Potentially Profitable, Uncorrelated, and Balanced Stocks by NP-hard Combinatorial Optimization", ARXIV.ORG, CORNELL UNIVERSITY LIBRARY, 201 OLIN LIBRARY CORNELL UNIVERSITY ITHACA, NY 14853, 12 July 2023 (2023-07-12), XP091561699, * abstract; sections 2, 3; figures 1, 2 * | 1-17 | |

TECHNICAL FIELDS SEARCHED (IPC)

G06N

-/--

The present search report has been drawn up for all claims

| Place of search | Date of completion of the search | Examiner |
|---|---|---|
| The Hague | 8 August 2024 | Tebbal Barracosa, B |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  ...........................................................................................
& : member of the same patent family, corresponding
   document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 15 9779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TATSUMURA KOSUKE KOSUKE TATSUMURA@TOSHIBA CO JP: "Large-scale combinatorial optimization in real-time systems by FPGA-based accelerators for simulated bifurcation", PROCEEDINGS OF THE 11TH INTERNATIONAL SYMPOSIUM ON HIGHLY EFFICIENT ACCELERATORS AND RECONFIGURABLE TECHNOLOGIES, ACMPUB27, NEW YORK, NY, USA, 21 June 2021 (2021-06-21), pages 1-6, XP058592546, DOI: 10.1145/3468044.3468045 ISBN: 978-1-4503-8549-7 * abstract; section 2, 3 * | 1-17 | |
| A | TATSUMURA KOSUKE ET AL: "FPGA-Based Simulated Bifurcation Machine", 2019 29TH INTERNATIONAL CONFERENCE ON FIELD PROGRAMMABLE LOGIC AND APPLICATIONS (FPL), IEEE, 8 September 2019 (2019-09-08), pages 59-66, XP033649156, DOI: 10.1109/FPL.2019.00019 [retrieved on 2019-11-05] * abstract; sections II, III, IV; figures 1-3 * | 1-17 | **TECHNICAL FIELDS SEARCHED (IPC)** |

The present search report has been drawn up for all claims

| Place of search | Date of completion of the search | Examiner |
|---|---|---|
| The Hague | 8 August 2024 | Tebbal Barracosa, B |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021060864 A
- JP 2019145010 A
- JP 2019159566 A
- JP 2021043667 A
- JP 2021043589 A

**Non-patent literature cited in the description**

- **HAYATO GOTO** ; **KOSUKE TATSUMURA** ; **ALEXANDER R. DIXON**. Combinatorial optimization by simulating adiabatic bifurcations in nonlinear Hamiltonian systems. *Science Advances*, 2019, vol. 5, eaav2372
- **HAYATO GOTO** ; **KOTARO ENDO** ; **MASARU SUZUKI** ; **YOSHISATO SAKAI** ; **TARO KANAO** ; **YOHEI HAMAKAWA** ; **RYO HIDAKA** ; **MASAYA YAMASAKI** ; **KOSUKE TATSUMURA**. High-performance combinatorial optimization based on classical mechanics. *Science Advances*, 2021, vol. 7, eabe7953